# EUROPEAN PATENT APPLICATION

(11) **EP 4 266 600 A1**
(43) Date of publication of application: **25.10.2023**
(21) Application number: 22742154.2
(22) Date of filing: 18.01.2022
(51) Int. Cl.: H04B 10/60, G01N 21/64, H04B 10/54

(54) **RECEIVER, TRANSMITTER, AND SIGNAL TRANSMISSION METHOD**

(30) Priority: 21.01.2021 CN 202110084509
(71) Applicant: Huawei Technologies Co., Ltd., Shenzhen, Guangdong 518129 (CN)
(72) Inventor: LIANG, Dong, Shenzhen, Guangdong 518129 (CN); LV, Yibo, Shenzhen, Guangdong 518129 (CN); HUANG, Jingjing, Shenzhen, Guangdong 518129 (CN); ZHANG, Junping, Shenzhen, Guangdong 518129 (CN)
(74) Representative: Maiwald GmbH
(86) International application number: PCT/CN2022/072527
(87) International publication number: WO 2022/156675

(57) **Abstract**

This application provides a receiver (400), a transmitter (300), and a signal transmission method, to resolve a problem that movement and a posture change of a terminal are limited. The receiver (400) includes a fluorescence conversion unit (410) and a fluorescence extraction unit (420), where an output end of the fluorescence conversion unit (410) is connected to an input end of the fluorescence extraction unit (420). The fluorescence conversion unit (410) is configured to: receive a first optical signal with m wavelengths sent by the transmitter, and convert the first optical signal with m wavelengths into a first fluorescence signal. The fluorescence extraction unit (420) is configured to generate n channels of fluorescence signals based on the first fluorescence signal, where wavelengths of fluorescence signals in a same channel are the same, and m and n are both positive integers.

## Description

### CROSS-REFERENCE TO RELATED APPLICATIONS

This application claims priority to Chinese Patent Application No. 202110084509.9, filed with the China National Intellectual Property Administration on January 21, 2021 and entitled "RECEIVER, TRANSMITTER, AND SIGNAL TRANSMISSION METHOD", which is incorporated herein by reference in its entirety.

### TECHNICAL FIELD

Embodiments of this application relate to the field of communication technologies, and in particular, to a receiver, a transmitter, and a signal transmission method.

### BACKGROUND

In an optical wireless communication technology, a data-modulated optical signal is transmitted between a transmitter and a receiver. Usually, the transmitter outputs the data-modulated optical signal, and the receiver collects space light by using a lens, and provides the collected optical signal for a back-end photodetector. After the photodetector implements optical-to-electrical conversion, electrical signal processing is subsequently implemented by using a classic circuit such as a trans-impedance amplifier (trans-impedance amplifier, TIA).

Currently, to enable the lens of the receiver to collect enough optical signals, a diameter of the lens needs to be far greater than a diameter of a photosensitive surface of the photodetector, and an effective area of the photodetector needs to be on a focal plane of the lens. As a result, a field of view (field of view, FoV) of the receiver is relatively small, and movement and a posture change of a device in which the receiver is located are limited.

### SUMMARY

This application provides a receiver, a transmitter, and a signal transmission method, to resolve a problem that movement and a posture change of a device in which the receiver is located are limited. This application can be applied to an optical wireless communication scenario in which a terminal moves.

According to a first aspect, this application provides a receiver, including a fluorescence conversion unit and a fluorescence extraction unit, where an output end of the fluorescence conversion unit is connected to an input end of the fluorescence extraction unit. The fluorescence conversion unit is configured to: receive a first optical signal with m wavelengths sent by a transmitter, and convert the first optical signal with m wavelengths into a first fluorescence signal. The fluorescence extraction unit is configured to generate n channels of fluorescence signals based on the first fluorescence signal, where wavelengths of fluorescence signals in a same channel are the same, and m and n are both positive integers.

In this embodiment of this application, through multi-wavelength fluorescence collection, an optical signal can be received at a large field of view, thereby reducing limitations on movement and a posture change of a device in which the receiver is located. A plurality of channels of fluorescence signals are divided for processing, so that interference between fluorescence signals with different wavelengths can be avoided, and a system rate and signal processing performance can be improved.

In an optional implementation, the receiver further includes a fluorescence processing unit. The fluorescence processing unit is configured to: convert the n channels of fluorescence signals into electrical signals, and process the electrical signals.

In an optional implementation, the fluorescence conversion unit includes a first fluorescence concentrator, the first fluorescence concentrator includes p types of fluorescence materials, each type of fluorescence material absorbs an optical signal and excites a fluorescence signal, wavelengths of fluorescence signals excited by different types of fluorescence materials are different, and the p types of fluorescence materials absorb the first optical signal with m wavelengths, where p is a positive integer. The fluorescence conversion unit is specifically configured to: convert the first optical signal with m wavelengths into the first fluorescence signal by using the first fluorescence concentrator, and output the first fluorescence signal, where the first fluorescence signal includes a fluorescence signal with p wavelengths. Doping of a plurality of types of fluorescence materials may enhance a capability of the first fluorescence concentrator to process multi-wavelength optical signals.

In an optional implementation, the fluorescence extraction unit includes an optical wave division subunit and n filter subunits, and each filter subunit is configured to filter a fluorescence signal with one wavelength. The optical wave division subunit is configured to divide the received first fluorescence signal into p channels of fluorescence signals, where wavelengths of fluorescence signals in different channels are different, and propagation directions of fluorescence signals in different channels are different; and the n channels of fluorescence signals are generated after the p channels of fluorescence signals are filtered by the n filter subunits, where each channel of the p channels of fluorescence signals is filtered by at least one of the n filter subunits, and n is greater than or equal to p. A plurality of channels of fluorescence signals are divided, and the plurality of channels of fluorescence signals are filtered in parallel, so that interference between fluorescence signals with different wavelengths can be further reduced.

In an optional implementation, the fluorescence extraction unit includes an optical wave division subunit. The optical wave division subunit is configured to divide the received first fluorescence signal into the n channels of fluorescence signals, where n is equal to p, wavelengths of the n channels of fluorescence signals are in one-to-one correspondence with the p wavelengths, and propagation directions of fluorescence signals in different channels are different.

In an optional implementation, the fluorescence extraction unit further includes n second light concentrator subunits and/or n filter subunits, each light concentrator subunit is configured to concentrate a fluorescence signal with one wavelength, and each filter subunit is configured to filter a fluorescence signal with one wavelength. The n channels of fluorescence signals are respectively concentrated by the n second light concentrator subunits and then output; the n channels of fluorescence signals are respectively filtered by the n filter subunits and then output; or the n channels of fluorescence signals are respectively concentrated by the n second light concentrator subunits, filtered by the n filter subunits, and then output. Effective transmission of fluorescence signals can be enhanced through concentration processing, and interference between fluorescence signals with different wavelengths can be avoided through filtering processing, thereby improving system performance.

In an optional implementation, the optical wave division subunit is further configured to: perform frequency conversion processing on the received first fluorescence signal, and divide, based on different wavelengths, the first fluorescence signal on which frequency conversion has been performed. Wavelengths of multi-wavelength fluorescence can be controlled equivalently through frequency conversion processing, and fluorescence signals with different wavelengths can be distinguished easily.

In an optional implementation, the fluorescence extraction unit further includes a first light concentrator subunit. The first light concentrator subunit is configured to: receive the first fluorescence signal output by the fluorescence conversion unit, concentrate the first fluorescence signal, and output the concentrated first fluorescence signal to the optical wave division subunit. Effective collection and transmission of the first fluorescence signal can be enhanced through concentration processing.

In an optional implementation, the fluorescence material includes a superlattice fluorescence material. This helps increase a system bandwidth and implement high-speed signal transmission.

In an optional implementation, the fluorescence conversion unit includes p second fluorescence concentrators, and each second fluorescence concentrator is configured to: receive a first optical signal with a set wavelength, convert the first optical signal with a set wavelength into a one channel of fluorescence signals, and output the one channel of fluorescence signals. The p second fluorescence concentrators receive the first optical signal with m wavelengths, where the set wavelength is one of the m wavelengths, and p is a positive integer. The fluorescence conversion unit is specifically configured to: convert, by using the p second fluorescence concentrators, the first optical signal with m wavelengths into the first fluorescence signal including p channels of fluorescence signals, and output the p channels of fluorescence signals, where wavelengths of fluorescence signals in a same channel are the same. The p second fluorescence concentrators may be used to implement a capability of processing multi-wavelength optical signals in parallel, for example, respectively convert first optical signals with different wavelengths into fluorescence signals in parallel.

In an optional implementation, wavelengths of optical signals received by different second fluorescence concentrators in the p second fluorescence concentrators are different, and p is equal to m.

In an optional implementation, the p second fluorescence concentrators include at least two second fluorescence concentrators, wavelengths of optical signals received by the at least two second fluorescence concentrators are the same, and p is greater than m.

In an optional implementation, the p second fluorescence concentrators are arranged in a stack manner or in an interleaving manner. In this way, multi-wavelength optical signals can be effectively received in a small area or in a same area.

In an optional implementation, the fluorescence extraction unit includes k third light concentrator subunits, and each third light concentrator subunit is configured to: receive at least one channel of fluorescence signals with a same wavelength in the p channels of fluorescence signals, and concentrate the at least one channel of fluorescence signals with a same wavelength, where different third light concentrator subunits receive fluorescence signals output by different second fluorescence concentrators, k is less than or equal to p, and k is a positive integer. A plurality of channels of fluorescence signals are separately concentrated, so that effective collection and transmission of each channel of fluorescence signal can be enhanced.

In an optional implementation, k is equal to n, the n channels of fluorescence signals are generated after the p channels of fluorescence signals are concentrated by the k third light concentrator subunits, and in the n channels of fluore scence signals, wavelengths of fluorescence signals in different channels are different.

In an optional implementation, k is greater than n, the fluorescence extraction unit further includes n optical path combination subunits, and each optical path combination subunit is configured to combine at least two channels of fluorescence signals with a same wavelength into one channel of fluorescence signals; k channels of fluorescence signals are generated after the p channels of fluorescence signals are concentrated by the k third light concentrator subunits, where the k channels of fluorescence signals include at least two channels of fluorescence signals with a same wavelength; and the n channels of fluorescence signals are generated after the k channels of fluorescence signals are combined by the n optical path combination subunits, where in the n channels of fluorescence signals, wavelengths of fluorescence signals in different channels are different.

In an optional implementation, the fluorescence extraction unit further includes a fluorescence adjusting subunit and/or n filter subunits. The fluorescence adjusting subunit is configured to perform an optical wave aggregation operation, a frequency conversion operation, and an optical wave division operation on the n channels of fluorescence signals, where the n filter subunits are in one-to-one correspondence with the n channels of fluorescence signals, and each filter subunit is configured to filter a fluorescence signal with one wavelength; and the n channels of fluorescence signals are adjusted by the fluorescence adjusting subunit and then output; the n channels of fluorescence signals are filtered by the n filter subunits and then output; or the n channels of fluorescence signals are adjusted by the fluorescence adjusting subunit, filtered by the n filter subunits, and then output.

In an optional implementation, the fluorescence processing unit includes n optical-to-electrical conversion subunits, and the n optical-to-electrical conversion subunits are in one-to-one correspondence with the n channels of fluorescence signals. The fluorescence processing unit is further configured to convert the n channels of fluorescence signals into n channels of electrical signals by using the n optical-to-electrical conversion subunits.

In an optional implementation, the fluorescence processing unit further includes an electrical signal processing subunit, and output ends of the n optical-to-electrical conversion subunits are connected to an input end of the electrical signal processing subunit. The electrical signal processing subunit is configured to perform one or more operations of combination, amplification, and equalization on the n channels of electrical signals.

In an optional implementation, the first optical signal with m wavelengths is used to carry a synchronization signal, and the synchronization signal is used to determine a time sequence for sending a data signal by the transmitter. The electrical signal processing subunit is further configured to: obtain the synchronization signal based on the electrical signals, and determine, based on the synchronization signal, the time sequence for sending the data signal by the transmitter. A synchronization processing mechanism on a side of the receiver is set by using the synchronization signal, so that the receiver can process the data signal.

In an optional implementation, the fluorescence conversion unit is specifically configured to receive a first optical signal with j of the m wavelengths at different moments, where the first optical signal with j wavelengths is used to carry the synchronization signal, j is a positive integer, j is greater than 1, and j is less than or equal to m.

In an optional implementation, the fluorescence conversion unit is specifically configured to receive a first optical signal with j of the m wavelengths at a same moment, where the first optical signal with j wavelengths is used to carry the synchronization signal, j is a positive integer, j is greater than 1, and j is less than or equal to m.

In an optional implementation, the first optical signal with m wavelengths is used to carry the data signal sent by the transmitter. The fluorescence conversion unit is specifically configured to: receive, at different moments, the first optical signal with m wavelengths that carries the data signal, or receive, at a same moment, the first optical signal with m wavelengths that carries the data signal.

According to a second aspect, this application provides a transmitter, including a signal processing unit and an optical output unit, where an output end of the signal processing unit is connected to an input end of the optical output unit. The signal processing unit is configured to modulate an electrical signal to a first optical signal with m wavelengths. The optical output unit is configured to output the first optical signal with m wavelengths to a receiver. Multi-wavelength optical signals are used to implement high-speed mapping of electrical signals to different optical carriers, to meet a requirement of high-speed multi-wavelength fluorescence reception on air interface waveform transmission, and improve a system rate.

In an optional implementation, the electrical signal includes a synchronization signal, the first optical signal with m wavelengths is used to carry the synchronization signal, and the synchronization signal is used to determine a time sequence for sending a data signal by the transmitter.

In an optional implementation, the signal processing unit is specifically configured to modulate the synchronization signal to a first optical signal with j of the m wavelengths, where the first optical signal with j wavelengths is used to carry the synchronization signal, j is a positive integer, j is greater than 1, and j is less than or equal to m. The optical output unit is specifically configured to: output the first optical signal with j wavelengths at a same moment, or output the first optical signal with j wavelengths at different moments.

In an optional implementation, the electrical signal includes the data signal, and the first optical signal with m wavelengths is used to carry the data signal sent by the transmitter. The signal processing unit is specifically configured to modulate the data signal to the first optical signal with m wavelengths. The optical output unit is specifically configured to output the first optical signal with m wavelengths at different moments. Multi-wavelength time division transmission is implemented by controlling transmission of an optical signal carrying the data signal, so that a fluorescence life problem related to a side of the receiver can be overcome, intercode interference caused by a fluorescence effect can be avoided, and a system rate can be improved. Alternatively, the optical output unit is specifically configured to output the first optical signal with m wavelengths at a same moment. Multi-wavelength air interface waveforms are output in parallel to implement high-speed transmission of the data signal.

According to a third aspect, this application provides a signal transmission method, including: receiving a first optical signal with m wavelengths from a transmitter, and converting the first optical signal with m wavelengths into a first fluorescence signal; and generating n channels of fluorescence signals based on the first fluorescence signal, where wavelengths of fluorescence signals in a same channel are the same, and m and n are both positive integers.

In this embodiment of this application, through multi-wavelength fluorescence collection, an optical signal can be received at a large field of view, thereby reducing limitations on movement and a posture change of a device in which a receiver is located. A plurality of channels of fluorescence signals are divided for processing, so that interference between fluorescence signals with different wavelengths can be avoided, and a system rate and signal processing performance can be improved.

In an optional implementation, the method further includes: converting the n channels of fluorescence signals into electrical signals, and processing the electrical signals.

In an optional implementation, the converting the first optical signal with m wavelengths into a first fluorescence signal includes: converting the first optical signal with m wavelengths into the first fluorescence signal by using a first fluorescence concentrator, where the first fluorescence concentrator includes p types of fluorescence materials, each type of fluorescence material absorbs an optical signal and excites a fluorescence signal, wavelengths of fluorescence signals excited by different types of fluorescence materials are different, the p types of fluorescence materials absorb the first optical signal with m wavelengths, the first fluorescence signal includes a fluorescence signal with p wavelengths, and p is a positive integer.

In an optional implementation, the generating n channels of fluorescence signals based on the first fluorescence signal includes: dividing the first fluorescence signal into p channels of fluorescence signals, where wavelengths of fluorescence signals in different channels are different, and propagation directions of fluorescence signals in different channels are different, and filtering the p channels of fluorescence signals, to generate the n channels of fluorescence signals, where n is greater than or equal to p.

In an optional implementation, the generating n channels of fluorescence signal based on the first fluorescence signals includes: dividing the first fluorescence signal into the n channels of fluorescence signals, where n is equal to p, wavelengths of the n channels of fluorescence signals are in one-to-one correspondence with the p wavelengths, and propagation directions of fluorescence signals in different channels are different.

In an optional implementation, the method further includes: concentrating and/or filtering each channel of the n channels of fluorescence signals.

In an optional implementation, the method further includes: performing frequency conversion processing on the first fluorescence signal before dividing the first fluorescence signal.

In an optional implementation, the method further includes: concentrating the first fluorescence signal before dividing the first fluorescence signal.

In an optional implementation, the receiving a first optical signal with m wavelengths from a transmitter, and converting the first optical signal with m wavelengths into a first fluorescence signal includes: receiving the first optical signal with m wavelengths from the transmitter by using p second fluorescence concentrators, and converting the first optical signal with m wavelengths into the first fluorescence signal, where the first fluorescence signal includes p channels of fluorescence signals, wavelengths of fluorescence signals in a same channel are the same, each second fluorescence concentrator can receive a first optical signal with a set wavelength and convert the first optical signal with a set wavelength into a one channel of fluorescence signals, a wavelength of the one channel of fluorescence signals is related to the set wavelength, the set wavelength is one of the m wavelengths, and p is a positive integer.

In an optional implementation, wavelengths of optical signals received by different second fluorescence concentrators in the p second fluorescence concentrators are different, and p is equal to m.

In an optional implementation, the p second fluorescence concentrators include at least two second fluorescence concentrators, wavelengths of optical signals received by the at least two second fluorescence concentrators are the same, and p is greater than m.

In an optional implementation, the p second fluorescence concentrators are arranged in a stack manner or in an interleaving manner.

In an optional implementation, the method further includes: concentrating the p channels of fluorescence signals by using k third light concentrator subunits, where each third light concentrator subunit concentrates at least one channel of fluorescence signals with a same wavelength in the p channels of fluorescence signals, different third light concentrator subunits correspond to fluorescence signals of different second fluorescence concentrators, k is less than or equal to p, and k is a positive integer.

In an optional implementation, k is equal to n, the n channels of fluorescence signals are generated after the p channels of fluorescence signals are concentrated by the k third light concentrator subunits, and in the n channels of fluorescence signals, wavelengths of fluorescence signals in different channels are different.

In an optional implementation, k channels of fluorescence signals are generated after the p channels of fluorescence signals are concentrated by the k third light concentrator subunits, where the k channels of fluorescence signals include at least two channels of fluorescence signals with a same wavelength, and k is greater than n; and the method further includes: combining the k channels of fluorescence signals into the n channels of fluorescence signals, where in the n channels of fluorescence signals, wavelengths of fluorescence signals in different channels are different.

In an optional implementation, the method further includes: performing an optical wave aggregation operation, a frequency conversion operation, and an optical wave division operation on the n channels of fluorescence signals; and/or filtering the n channels of fluorescence signals in parallel.

In an optional implementation, the converting the n channels of fluorescence signals into electrical signals includes: converting the n channels of fluorescence signals into n channels of electrical signals, where the n channels of electrical signals are in one-to-one correspondence with the n channels of fluorescence signals.

In an optional implementation, the processing the electrical signals includes: performing one or more operations of combination, amplification, and equalization on the n channels of electrical signals.

In an optional implementation, the first optical signal with m wavelengths is used to carry a synchronization signal, and the synchronization signal is used to determine a time sequence for sending a data signal by the transmitter; and the method further includes: obtaining the synchronization signal based on the n channels of electrical signals, and determining, based on the synchronization signal, the time sequence for sending the data signal by the transmitter.

In an optional implementation, the receiving a first optical signal with m wavelengths from a transmitter includes: receiving a first optical signal with j of the m wavelengths from the transmitter at different moments, where the first optical signal with j wavelengths is used to carry the synchronization signal, j is a positive integer, j is greater than 1, and j is less than or equal to m.

In an optional implementation, the receiving a first optical signal with m wavelengths from a transmitter includes: receiving a first optical signal with j of the m wavelengths from the transmitter at a same moment, where the first optical signal with j wavelengths is used to carry the synchronization signal, j is a positive integer, j is greater than 1, and j is less than or equal to m.

In an optional implementation, the receiving a first optical signal with m wavelengths from a transmitter includes: receiving the first optical signal with m wavelengths from the transmitter at different moments; or receiving the first optical signal with m wavelengths from the transmitter at a same moment, where the first optical signal with m wavelengths is used to carry the data signal sent by the transmitter.

According to a fourth aspect, this application provides a signal transmission method. The method may be applied to a transmitter, and the method includes: modulating an electrical signal to a first optical signal with m wavelengths; and outputting the first optical signal with m wavelengths. Multi-wavelength optical signals are used to implement high-speed mapping of electrical signals to different optical carriers, to meet a requirement of high-speed multi-wavelength fluorescence reception on air interface waveform transmission, and improve a system rate.

In an optional implementation, the electrical signal includes a synchronization signal, the first optical signal with m wavelengths is used to carry the synchronization signal, and the synchronization signal is used to determine a time sequence for sending a data signal by the transmitter.

In an optional implementation, the modulating an electrical signal to a first optical signal with m wavelengths includes:
modulating the synchronization signal to a first optical signal with j of the m wavelengths, where the first optical signal with j wavelengths is used to carry the synchronization signal, j is a positive integer, j is greater than 1, and j is less than or equal to m .

In an optional implementation, the outputting the first optical signal with m wavelengths to a receiver includes: outputting the first optical signal with j wavelengths to the receiver at a same moment; or outputting the first optical signal with j wavelengths to the receiver at different moments.

In an optional implementation, the electrical signal includes the data signal, and the method further includes: modulating the data signal to the first optical signal with m wavelengths, where the first optical signal with m wavelengths is used to carry the data signal sent by the transmitter; and outputting the first optical signal with m wavelengths at different moments; or outputting the first optical signal with m wavelengths at a same moment.

According to a fifth aspect, this application provides a communication system, including the receiver according to any one of the first aspect and the optional implementations of the first aspect and the transmitter according to any one of the second aspect and the optional implementations of the second aspect.

According to a sixth aspect, an embodiment of this application provides a communication apparatus, including a processor, configured to: be connected to a memory, and invoke a program stored in the memory, to perform each implementation in the third aspect or the fourth aspect. The memory may be located inside or outside the apparatus. There are one or more processors.

According to a seventh aspect, an embodiment of this application further provides a computer-readable storage medium. The computer-readable storage medium stores instructions, and when the instructions are run on a computer, each implementation in the third aspect or the fourth aspect is performed.

According to an eighth aspect, an embodiment of this application further provides a computer program product, where the computer product includes a computer program, and when the computer program is run, each implementation in the third aspect or the fourth aspect is performed.

According to a ninth aspect, an embodiment of this application further provides a chip system, including a processor, configured to perform each implementation in the third aspect or the fourth aspect.

For technical effects that can be achieved in the third aspect to the ninth aspect, refer to descriptions of technical effects that can be achieved by corresponding technical solutions in the first aspect and the second aspect. Details are not described herein again.

### BRIEF DESCRIPTION OF DRAWINGS

FIG. 1a is a schematic architectural diagram of a transmitter;
FIG. 1b is a schematic architectural diagram of a receiver;
FIG. 1c is a schematic architectural diagram of another receiver;
FIG. 2 is a schematic diagram of a structure of an optical wireless communication system according to an embodiment of this application;
FIG. 3 is a schematic architectural diagram of optical receiving and sending according to an embodiment of this application;
FIG. 4a is a diagram 1 of a synchronization time sequence according to an embodiment of this application;
FIG. 4b is a diagram 1 of a synchronization time sequence according to an embodiment of this application;
FIG. 5a is a diagram 1 of a synchronization time sequence according to an embodiment of this application;
FIG. 5b is a diagram 1 of a synchronization time sequence according to an embodiment of this application;
FIG. 5c is a diagram 1 of a synchronization time sequence according to an embodiment of this application;
FIG. 6a is a diagram 1 of a data time sequence according to an embodiment of this application;
FIG. 6b is a diagram 1 of a data time sequence according to an embodiment of this application;
FIG. 7 is a schematic diagram 1 of a structure of a transmitter according to an embodiment of this application;
FIG. 8 is a schematic diagram 1 of a structure of a transmitter according to an embodiment of this application;
FIG. 9a is a schematic diagram 1 of a structure of a multi-wavelength processing subunit in a transmitter according to an embodiment of this application;
FIG. 9b is a schematic diagram 1 of a structure of a multi-wavelength processing subunit in a transmitter according to an embodiment of this application;
FIG. 9c is a schematic diagram 1 of a structure of a multi-wavelength processing subunit in a transmitter according to an embodiment of this application;
FIG. 10 is a schematic diagram 1 of a structure of a receiver according to an embodiment of this application;
FIG. 11a is a schematic diagram 1 of a structure of a receiver according to an embodiment of this application;
FIG. 11b is a schematic diagram 1 of a structure of a receiver according to an embodiment of this application;
FIG. 12 is a schematic diagram 1 of a structure of a receiver according to an embodiment of this application;
FIG. 13 is a schematic diagram 1 of a structure of a receiver according to an embodiment of this application;
FIG. 14 is a schematic diagram 1 of arrangement of second fluorescence concentrators according to an embodiment of this application;
FIG. 15a is a schematic diagram 1 of a structure of a receiver according to an embodiment of this application;
FIG. 15b is a schematic diagram 1 of a structure of a receiver according to an embodiment of this application;
FIG. 16 is a schematic diagram 1 of a structure of a receiver according to an embodiment of this application;
FIG. 17 is a schematic diagram 1 of arrangement of second fluorescence concentrators according to an embodiment of this application;
FIG. 18 is a schematic flowchart of a signal transmission method according to an embodiment of this application; and
FIG. 19 is a schematic diagram of a structure of a communication apparatus according to an embodiment of this application.

### DESCRIPTION OF EMBODIMENTS

Embodiments of this application are applied to a high-speed optical wireless communication network.

The following describes embodiments of this application in detail with reference to the accompanying drawings.

First, some terms provided in this application are explained and described, to help a person skilled in the art have a better understanding.

### (1) Optical wireless communication technology

The optical wireless communication technology is one of the key fields in existing wireless communication technologies. Different from existing wireless communication systems that are based on 5 to 6 GHz, 60 GHz, and 60 THz frequency bands, the optical wireless communication technology has advantages such as a large available bandwidth, a small transmit antenna, and electromagnetic immunity.

### (2) Optical signal

In the optical wireless communication technology, a transmitting end transmits corresponding data, information, and the like to a receiving end through optical signal space propagation. For example, in the following embodiments of this application, a transmitter transmits related data, information, and the like to a receiver by sending (or referred to as outputting) a first optical signal, and in this case, the receiver may obtain the related data, the information, and the like from the transmitter by receiving the first optical signal.

### (3) Fluorescence

The fluorescence refers to a photoluminescence phenomenon. When a substance is irradiated by light with a wavelength, the substance absorbs light energy, then enters an excited state, and immediately excites emergent light with a different wavelength from that of the incident light. After incidence of the light stops, the photoluminescence phenomenon disappears. The emergent light with this characteristic is referred to as fluorescence.

A first fluorescence signal in the following of embodiments of this application is fluorescence excited by using, as the incident light, an optical signal sent by the transmitter.

(4) "A plurality of" in embodiments of this application means two or more. The term "and/or" describes an association relationship between associated objects and indicates that three relationships may exist. For example, A and/or B may indicate the following three cases: Only A exists, both A and B exist, and only B exists. The character "/" usually indicates an "or" relationship between the associated objects. In addition, it should be understood that although terms such as "first" and "second" may be used in embodiments of the present invention to describe objects, the objects are not limited to these terms. These terms are merely used to distinguish the objects from each other.

(5) The terms "including", "comprising", and any other variants thereof mentioned in descriptions of embodiments of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that, in embodiments of this application, the term such as "example" or "for example" is used to represent giving an example, an illustration, or descriptions. Any embodiment or design scheme described as "example" or "for example" in embodiments of this application should not be explained as being more preferred or having more advantages than another embodiment or design scheme. Exactly, use of the term such as "example" or "for example" is intended to present a relative concept in a specific manner.

In a related technology, the transmitter usually transmits an optical signal with one wavelength, and a side of the receiver collects the optical signal by using a lens or a fluorescence concentrator integrated with a single fluorescence material. The fluorescence concentrator integrated with the single fluorescence material absorbs the optical signal and excites a fluorescence signal with one wavelength.

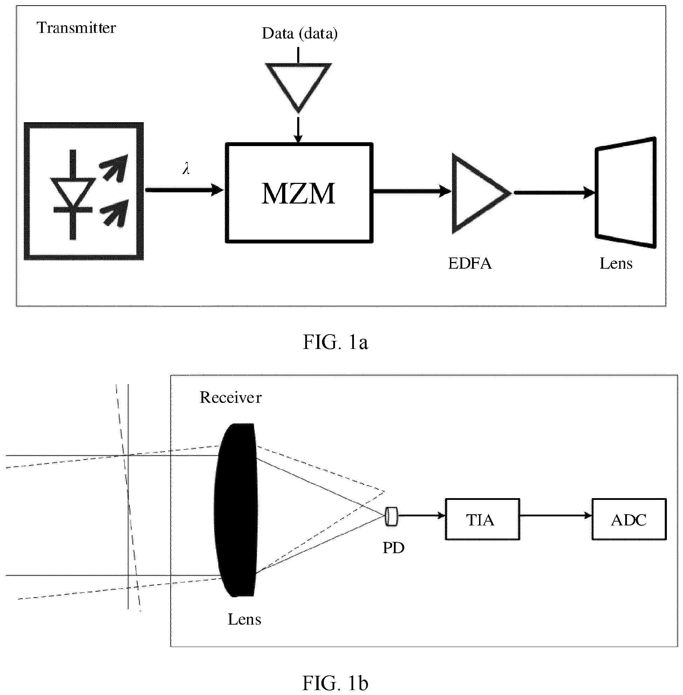

FIG. 1a shows an architecture of an existing transmitter. The transmitter loads a wanted signal through external modulation, and modulates an optical carrier envelope. For example, the transmitter loads a wavelength *λ* by using a tunable light source, and modulates data (data) to an optical signal with a single wavelength of *λ* by using a Mach-Zehnder modulator (Mach-Zehnder modulator, MZM). After the optical signal is amplified by an erbium-doped fiber amplifier (erbium-doped fiber amplifier, EDFA), a lens (Tx Lens) of the transmitter collimates or disperses a beam of the optical signal and then outputs the optical signal.

FIG. 1b shows an architecture of an existing receiver. The receiver collects, by using a lens (RX Lens), space light including an optical signal with a single wavelength sent by a transmitter, and provides the collected optical signal for a back-end photodetector (photodetector, PD), to convert the optical signal into an electrical signal. After being amplified by a trans-impedance amplifier (trans-impedance amplifier, TIA), the electrical signal is input to an analog-to-digital converter (analog-to-digital converter, ADC) for subsequent electrical signal processing. As shown in FIG. 1b, to enable the lens of the receiver to collect enough optical signals, a diameter of the lens needs to be far greater than a diameter (whose typical value reaches a µm magnitude) of a photosensitive surface of the photodetector, and an effective area of the photodetector needs to be in a focal plane of the lens. As a result, a field of view (field of view, FoV) of the receiver is small, and movement and a posture change of a terminal in which the receiver is located are limited. For example, FIG. 1b shows, by using solid lines, a range in which the optical signal can be collected, and shows, by using dashed lines, a case in which no optical signal is received.

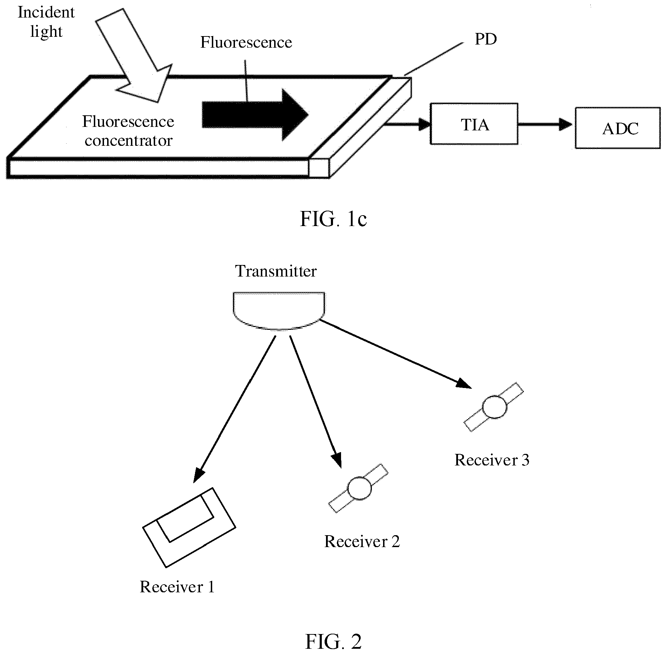

FIG. 1c shows another architecture of an existing receiver. An optical signal output by a transmitter is irradiated as incident light to a fluorescence concentrator that is integrated with a single fluorescence material and that is of the receiver. The fluorescence concentrator excites fluorescence, and the fluorescence is received by a photodetector attached to an edge of the fluorescence concentrator, to convert the fluorescence into an electrical signal. After being amplified by a trans-impedance amplifier (trans-impedance amplifier, TIA), the electrical signal is input to an analog-to-digital converter (analog-to-digital converter, ADC) for subsequent electrical signal processing. Usually, an FoV of the fluorescence concentrator in this solution may be supported to be ±60°. The fluorescence concentrator used in the receiver is integrated with the single fluorescence material. The material has a long fluorescence life and cannot implement high-speed optical wireless communication.

Based on the technical problems related to the foregoing related technologies, embodiments of this application provide a receiver, a transmitter, and a signal transmission method. By improving structures of the receiver and the transmitter and a manner of transmitting a signal between the receiver and the transmitter, limitations on movement and a posture change of a terminal are reduced, and this is applicable to high-speed optical wireless communication. Embodiments of this application may be specifically applied to scenarios such as indoor terminal access and long-distance free space optics (free space optics, FSO) communication.

Refer to FIG. 2. An embodiment of this application provides an optical wireless communication system. The optical wireless communication system includes at least one transmitter and at least one receiver. The transmitter may modulate and output multi-wavelength optical signals. The receiver may receive the multi-wavelength optical signals, convert the multi-wavelength optical signals into fluorescence signals, and then perform subsequent optical-to-electrical conversion and electrical signal processing. The transmitter may be used in a wireless device serving as a transmitting end, or may be the wireless device serving as a transmitting end. The receiver may be used in a wireless device serving as a receiving end, or may be the wireless device serving as a receiving end. The wireless device in this embodiment of this application may be a network device and/or a terminal device.

The network device may be a base station device, or may be referred to as an access network device or an access node (access node, AN), and provides a wireless access service for the terminal device. The access node may specifically be an evolved NodeB (evolved NodeB, eNB or eNodeB for short) in a long term evolution (Long Term Evolution, LTE) system, a base station device (gNB), a small base station device, or a radio access node (Wi-FiAP) in a 5^{th} generation (5^{th} Generation, 5G) network, a device that undertakes a base station function in device-to-device (Device-to-Device, D2D) communication, vehicle-to-everything (vehicle-to-everything, V2X) communication, machine-to-machine (machine-to-machine, M2M) communication, or internet of things (Internet of Things) communication, or the like. This is not limited in this embodiment of this application.

The terminal device is also referred to as a terminal, user equipment (user equipment, UE), a mobile station (mobile station, MS), a mobile terminal (mobile terminal, MT), or the like, and is a device that provides voice and/or data connectivity for a user, for example, a handheld device or a vehicle-mounted device having a wireless connection function. Currently, for example, some terminals are: a wireless network camera, a mobile phone (mobile phone), a tablet computer, a notebook computer, a palmtop computer, a mobile internet device (mobile internet device, MID), a wearable device such as a smartwatch, a virtual reality (virtual reality, VR) device, an augmented reality (augmented reality, AR) device, a wireless terminal in industrial control (industrial control), a wireless terminal in self driving (self driving), a wireless terminal in a smart grid (smart grid), a wireless terminal in transportation safety (transportation safety), a wireless terminal in a smart city (smart city), and a wireless terminal in a smart home (smart home). In an example, FIG. 2 shows only one transmitter 201 and three receivers, which are respectively a receiver 202, a receiver 203, and a receiver 204.

The following describes the transmitter and the receiver provided in embodiments of this application in detail.

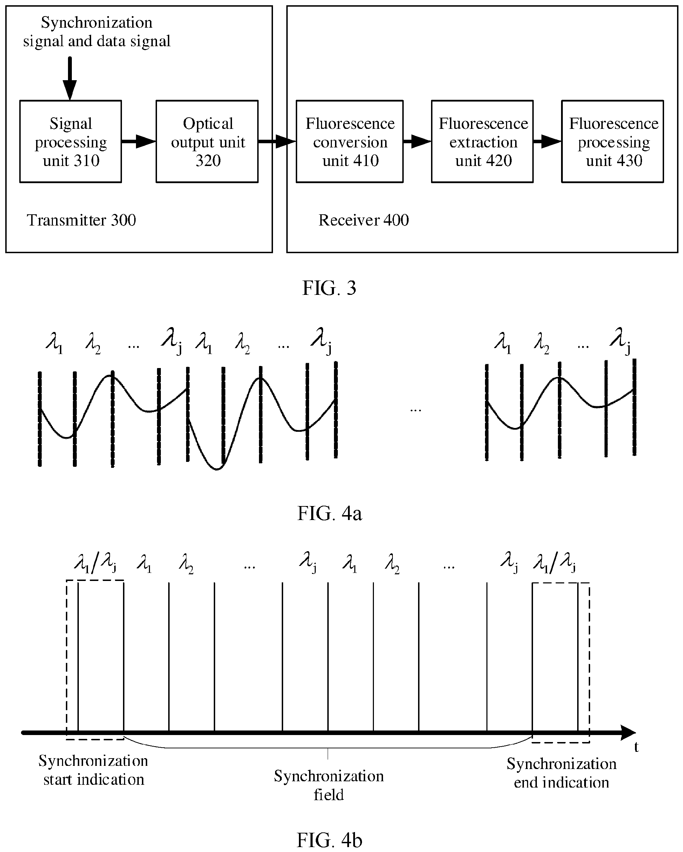

FIG. 3 shows an architecture of an optical transceiver according to an embodiment of this application. Specifically, an internal unit structure of a transmitter 300, an internal unit structure of a receiver 400, and communication between the transmitter and the receiver are shown.

The transmitter 300 includes a signal processing unit 310 and an optical output unit 320. An output end of the signal processing unit 310 is connected to an input end of the optical output unit 320. The signal processing unit 310 is configured to modulate an electrical signal to a first optical signal with m wavelengths. The optical output unit 320 is configured to output the first optical signal with m wavelengths to the receiver 400. Optionally, the first optical signal with m wavelengths is used to carry the foregoing electrical signal, the foregoing electrical signal includes a synchronization signal and/or a data signal, the synchronization signal is used to determine a time sequence for sending the data signal by the transmitter 300, and the data signal includes data information to be transmitted by the transmitter 300 to the receiver 400.

The receiver 400 includes a fluorescence conversion unit 410 and a fluorescence extraction unit 420, where an output end of the fluorescence conversion unit 410 is connected to an input end of the fluorescence extraction unit 420. The fluorescence conversion unit 410 is configured to: receive the first optical signal with m wavelengths sent by the transmitter 300, and convert the first optical signal with m wavelengths into a first fluorescence signal. The fluorescence extraction unit 420 is configured to generate n channels of fluorescence signals based on the first fluorescence signal, where wavelengths of fluorescence signals in a same channel are the same, and m and n are both positive integers. Optionally, as shown in FIG. 3, the receiver 400 further includes a fluorescence processing unit 430, where an output end of the fluorescence extraction unit 420 is connected to an input end of the fluorescence processing unit 430. The fluorescence processing unit 430 is configured to: convert the n channels of fluorescence signals into electrical signals, and process the electrical signals.

In this embodiment of this application, the transmitter outputs an optical signal with one or more wavelengths modulated by using the synchronization signal and/or the data signal, and the receiver may convert the optical signal with one or more wavelengths sent by the transmitter into a fluorescence signal, so that the optical signal can be received at a large field of view, and limitations on movement and a posture change of a device in which the receiver is located are reduced. The receiver extracts one or more channels of fluorescence signals based on the converted fluorescence signal for processing, so that interference between fluorescence signals with different wavelengths can be avoided, and a system rate and signal processing performance can be improved.

The following describes a related solution of the transmitter 300 in detail.

First, a solution of modulating the first optical signal based on the synchronization signal and/or the data signal and outputting the first optical signal is described in detail.

Optionally, the signal processing unit 310 may modulate a high-speed digital signal to a plurality of optical carriers with different wavelengths, and the plurality of optical carriers may be output in parallel or output in serial based on the different wavelengths and according to different time sequences. For detailed implementation, refer to the following three solutions.

Solution 1: The transmitter 300 may determine the first optical signal based on the synchronization signal, and output the first optical signal in a serial manner.

In this solution, the signal processing unit 310 of the transmitter 300 is specifically configured to modulate the synchronization signal to a first optical signal with j of the m wavelengths, where the first optical signal with j wavelengths is used to carry the synchronization signal, j is a positive integer, j is greater than 1, and j is less than or equal to m. The optical output unit 320 is specifically configured to output the first optical signal with j wavelengths at different moments. Outputting the first optical signal with j wavelengths at different moments may also be understood as outputting the first optical signal at a plurality of moments. A wavelength of a first optical signal output at each moment is one of the j wavelengths. However, that wavelengths corresponding to a first optical signal output at the different moments are different is not limited, and a quantity of bits carried in a first optical signal output at a moment is not limited either. A first optical signal output at a moment may carry one or more bits.

Optionally, the synchronization signal is modulated to optical carriers with different wavelengths, and each bit is used to modulate an amplitude of an optical carrier with one wavelength. Different bits may be used to modulate amplitudes of optical carriers with different wavelengths, or different bits may be used to modulate amplitudes of optical carriers with a same wavelength. For example, refer to a diagram of a synchronization time sequence shown in FIG. 4a. It is assumed that the transmitter 300 uses the first optical signal with j wavelengths to carry the synchronization signal. A first bit in the synchronization signal is used to modulate *λ*₁, only *λ*₁ is output by the transmitter 300, and other wavelengths are not output. A second bit is used to modulate *λ*₂. only *λ*₂ is output by the transmitter 300, and other wavelengths are not output. A j^{th} bit is used to modulate *λⱼ*, only *λⱼ* is output by the transmitter 300, and other wavelengths are not output. A (j+1)^{th} bit is used to modulate *λⱼ*, only *λ*₁ is output by the transmitter 300, and other wavelengths are not output. A (j+2)^{th} bit is used to modulate *λ*₂, only *λ*₂ is output by the transmitter 300, and other wavelengths are not output. By analogy, sending of the synchronization signal is completed. In an air interface transmission process, time division serial transmission is performed in a sequence such as *λ*₁, *λ*₂, ..., *λⱼ*, *λ*₁, *λ*₂, ..., *λⱼ* according to different time sequences. It should be noted that FIG. 4a is merely an example of a synchronization time sequence in which different bits are used to modulate amplitudes of optical carriers with different wavelengths, and does not indicate that this is limited in this embodiment of this application. Similarly, it is assumed that the transmitter 300 uses the first optical signal with j wavelengths to carry the synchronization signal. A first bit in the synchronization signal is used to modulate *λ*₁, only *λ*₁ is output by the transmitter 300, and other wavelengths are not output. A second bit may also be used to modulate *λ*₁, only *λ*₁ is output by the transmitter 300, and other wavelengths are not output. A j^{th} bit is used to modulate *λⱼ*, only *λⱼ* is output by the transmitter 300, and other wavelengths are not output. A (j+1)^{th} bit is used to modulate *λ*₁, only *λ*₁ is output by the transmitter 300, and other wavelengths are not output. A (j+2)^{th} bit is used to modulate *λ*₂. only *λ*₂ is output by the transmitter 300, and other wavelengths are not output. By analogy, sending of the synchronization signal is completed. In an air interface transmission process, time division serial transmission is performed in a sequence *λ*₁, *λ*₁, ..., *λⱼ*, *λ*₁, *λ*₂, ..., *λⱼ* according to different time sequences.

The foregoing synchronization signal includes a synchronization start indication, a synchronization field, and a synchronization end indication, and a bit sequence corresponding to the synchronization start indication, the synchronization field, and the synchronization end indication is sequentially the synchronization start indication, the synchronization field, and the synchronization end indication. Optionally, the synchronization field may be periodically repeated for a plurality of times. Similarly, synchronization start or end may also be periodically repeated. A specific repetition form and a quantity of repetition times are not specifically required or limited. In addition, it should be noted that the synchronization signal may also be referred to as a synchronization sequence or another name, provided that the synchronization signal can be used to determine the time sequence for sending the data signal by the transmitter 300. This is not limited in this embodiment of this application.

Alternatively, optionally, refer to a diagram of a synchronization time sequence shown in FIG. 4b. A wavelength polling pattern may be presented in a wavelength polling mode, to be specific, a single wavelength or a group of wavelengths is presented periodically, where the group of wavelengths includes a plurality of different wavelengths. The foregoing wavelength polling pattern may be used as a synchronization signal, to output a first optical signal carrying the synchronization signal. Optionally, the synchronization signal includes a synchronization start indication, a synchronization field, and a synchronization end indication. The synchronization start indication and the synchronization end indication may be presented by the transmitter 300 by outputting a wavelength in a set period of time. Wavelengths corresponding to synchronization start and synchronization end may be inconsistent. For example, as shown in FIG. 4b, if the first optical signal with j of the m wavelengths is used to carry the synchronization signal, and the j wavelengths are *λ*₁, *λ*₂, ..., and *λⱼ*, a wavelength of a first optical signal corresponding to the synchronization start indication is *λ*₁/*λⱼ*, and a wavelength of a first optical signal corresponding to the synchronization end indication is *λ*₁/*λⱼ*. In the synchronization field, the transmitter 300 outputs different wavelengths in a time division manner according to a time sequence, so that a wavelength sequence is in one-to-one correspondence with the synchronization field. When a wavelength is output, other wavelengths are not output. For example, *λ*₁, *λ*₂, ..., *λⱼ*, *λ*₁, *λ*₂, ..., and *λⱼ* are output sequentially.

In this embodiment of this application, a synchronization processing mechanism is set by using the synchronization signal, so that a side of the receiver can process the data signal of the transmitter. In addition, the synchronization signal is transmitted by using a multi-wavelength time division transmission method. This can break a limitation, on a communication rate, due to a long fluorescence life, and improve a system rate.

Solution 2: The transmitter 300 may determine the first optical signal based on the synchronization signal, and output the first optical signal in a parallel manner.

In this solution, the signal processing unit 310 of the transmitter 300 is specifically configured to modulate the synchronization signal to a first optical signal with j of the m wavelengths, where the first optical signal with j wavelengths is used to carry the synchronization signal, j is a positive integer, j is greater than 1, and j is less than or equal to m. The optical output unit 320 is specifically configured to output a first optical signal with some or all of the j wavelengths at a same moment. Multi-wavelength air interface waveforms are output in parallel to implement high-speed transmission of the synchronization signal.

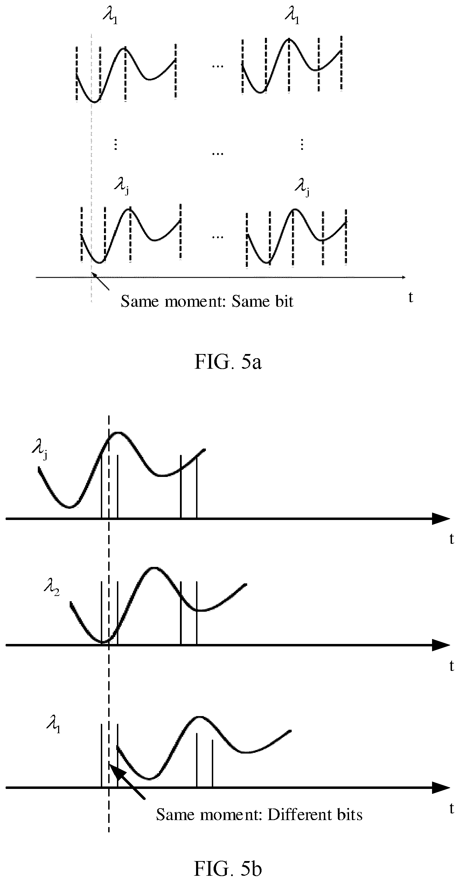

Optionally, refer to a diagram of a synchronization time sequence shown in FIG. 5a. The transmitter 300 may modulate different wavelengths based on synchronization start, a synchronization field, and synchronization end that are included in the synchronization signal, and the different wavelengths are modulated by using a same bit in the synchronization start, the synchronization field, or the synchronization end at a same moment. When outputting the first optical signal with j wavelengths modulated by using the synchronization signal, the transmitter 300 may output the first optical signal in parallel based on different wavelengths, for example, output, in parallel at a same moment, the first optical signal with j wavelengths modulated by using a same bit.

In addition, optionally, quantities of wavelengths of an optical signal output in parallel at all of a plurality of moments may be the same or different. For example, a quantity of wavelengths of an optical signal output in parallel at each of the plurality of moments is j. For example, a first optical signal with j wavelengths of λ₁, λ₂, ..., and λⱼ is output. For another example, a quantity of wavelengths of an optical signal output in parallel at a previous moment may be j, and a quantity of wavelengths of an optical signal output in parallel at a next moment is not j, where the quantity is less than or greater than j. An optical signal output at different moments carries different bits. For example, FIG. 5a shows that j wavelengths are output at each moment, and an optical signal with j wavelengths output at a same moment is modulated by using a same bit. According to a sequence of bits in the synchronization signal, an optical signal with a plurality of wavelengths modulated by using one bit is output at each moment, and is output sequentially. Optionally, the synchronization signal may be periodically repeated. A first optical signal with a plurality of wavelengths is output at a same moment, where all the wavelengths carry a same bit, so that receivers of a plurality of specifications can be compatible. Receivers of different specifications may have different capabilities of absorbing optical signal wavelengths.

Alternatively, optionally, the transmitter 300 may output, at a same moment, an optical signal with a plurality of wavelengths modulated by using a training sequence. Optionally, the optical signal with a plurality of wavelengths modulated by using the training sequence may be periodically and repeatedly output. The synchronization signal includes a synchronization start indication, the synchronization field, and a synchronization end indication. In this case, the foregoing training sequence may be the synchronization start indication or the synchronization end indication, or the foregoing training sequence may be some or all bits in the synchronization field. Alternatively, the synchronization start indication, the synchronization field, and the synchronization end indication are used to modulate different wavelengths, and an optical signal with a plurality of wavelengths output at a same moment carries a plurality of bits, where one wavelength may correspond to one or more bits. Different bits are used to modulate different wavelengths, and an optical signal with different wavelengths is modulated by using different bits at a same moment. As shown in a diagram of a synchronization time sequence in FIG. 5b, the first optical signal with j wavelengths modulated by using a plurality of bits is output at a same moment. For example, at a same moment, a bit for modulating *λ*₁ is different from a bit for modulating *λ*₂. Optionally, *λⱼ* may be modulated by using a plurality of bits at a same moment. According to a sequence of bits in the synchronization signal, the first optical signal with j wavelengths modulated by using a plurality of bits is output at each moment, and is output sequentially. Optionally, the synchronization signal may be periodically repeated. The first optical signal with a plurality of wavelengths is output at a same moment, where each wavelength carries at least one bit, and different wavelengths carry different bits. Therefore, a plurality of bits of the synchronization signal can be sent at a same moment, thereby reducing transmission time of the synchronization signal and reducing system overheads.

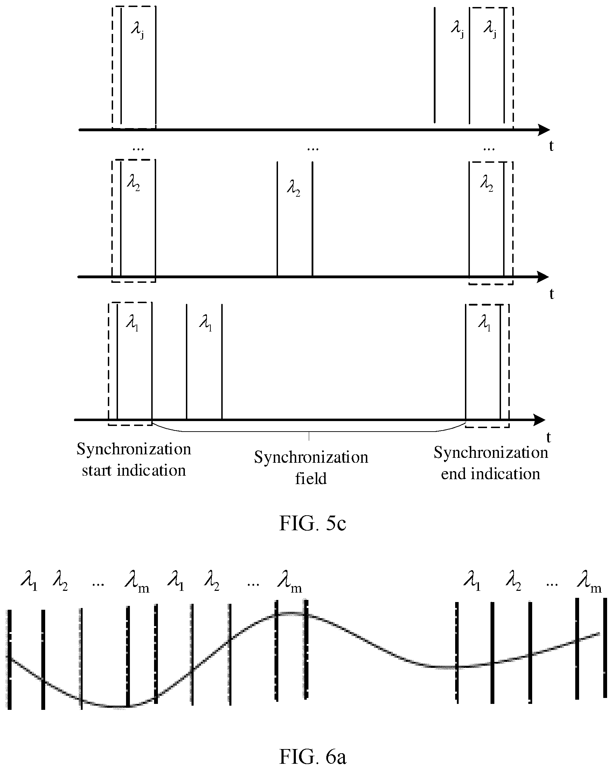

Alternatively, optionally, refer to a diagram of a synchronization time sequence shown in FIG. 5c. The transmitter 300 may present a wavelength polling pattern in a wavelength polling manner, to be specific, output the first optical signal with j wavelengths in parallel, where the first optical signal with j wavelengths carries the synchronization signal, and the synchronization signal includes a synchronization start indication, a synchronization field, and a synchronization end indication. The synchronization start indication and the synchronization end indication may be respectively reflected by combinations of different wavelengths of the j wavelengths output at a same moment. For example, some or all of the j wavelengths are simultaneously enabled at a synchronization start indication moment and a synchronization end indication moment, and an enabled wavelength corresponding to the synchronization start indication is the same as or different from an enabled wavelength corresponding to the synchronization end indication. In an example, FIG. 5c shows only a case in which all of the j wavelengths are simultaneously used at the synchronization start indication moment and the synchronization end indication moment. However, this is not limited in this embodiment of this application. In addition, optionally, a wavelength that is enabled at a same moment may alternatively correspond to a plurality of bits, but one bit corresponds to one wavelength. Wavelengths of the synchronization field are enabled sequentially according to a time sequence, namely, a bit sequence, and only an optical signal with one wavelength corresponding to one bit is output at each moment. As shown in FIG. 5c, a first bit in the synchronization field corresponds to *λ*₁. In this case, only *λ*₁ is output by the transmitter 300, and other wavelengths are not output. A second bit is used to modulate *λ*₂. In this case, only *λ*₂ is output by the transmitter 300, and other wavelengths are not output. By analogy, a j^{th} bit is used to modulate *λⱼ*. In this case, only *λⱼ* is output by the transmitter 300, and other wavelengths are not output. In addition, in this embodiment of this application, that different bits in the synchronization field correspond to different wavelengths is not limited. Different bits may alternatively correspond to a same wavelength, provided that only one wavelength is output at a same moment. Optionally, the synchronization field may be periodically repeated.

Solution 3: The transmitter 300 may modulate the first optical signal with m wavelengths based on the data signal, and output the first optical signal with m wavelengths.

In an optional implementation, the signal processing unit 310 of the transmitter 300 is further configured to modulate the data signal to the first optical signal with m wavelengths. The optical output unit 320 is further configured to output the first optical signal with m wavelengths at different moments. Outputting the first optical signal with m wavelengths at different moments may also be understood as outputting the first optical signal at a plurality of moments. A wavelength of a first optical signal output at each moment is one of the m wavelengths. However, that wavelengths corresponding to a first optical signal output at different moments are different is not limited, and a quantity of bits carried in a first optical signal output at a moment is not limited either. A first optical signal output at a moment may carry one or more bits.

Refer to a diagram of a data time sequence shown in FIG. 6a. The transmitter 300 modulates the first optical signal with m wavelengths based on the data signal, where each data bit included in the data signal is used to modulate an optical carrier with one wavelength, and optical carriers with wavelengths modulated by using different data bits may be the same or may be different. In other words, the transmitter 300 outputs a first optical signal with a plurality of wavelengths in serial according to a time sequence, and outputs, at each moment, a first optical signal with one wavelength corresponding to one data bit. Wavelengths of a first optical signal output at different moments may be the same or may be different, and this depends on whether optical carriers with wavelengths modulated by using different data bits are the same. In an example, FIG. 6a shows that the transmitter 300 outputs the first optical signal with m wavelengths in serial according to the time sequence, and may cyclically output, based on a bit length of data, the first optical signal with m wavelengths: *λ*₁, *λ*₁, ..., *λₘ*, *λ*₁, *λ*₁, ..., *λₘ*, *λ*₁, *λ*₁, ..., and *λₘ*. It should be noted that transmission of the data signal may not be periodically repeated. Multi-wavelength time division transmission is implemented by controlling transmission of an optical signal carrying the data signal, so that a fluorescence life problem related to a side of the receiver can be overcome, intercode interference caused by a fluorescence effect can be avoided, and a system rate can be improved.

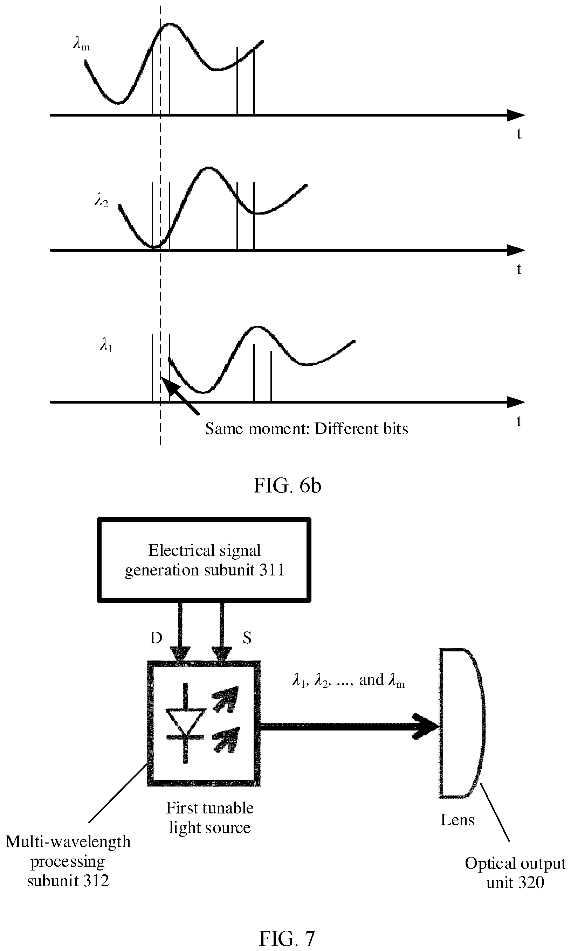

In another optional implementation, the data signal may alternatively be output in parallel. In this manner, the optical output unit 320 is configured to output the first optical signal with m wavelengths at a same moment. FIG. 6b is a diagram of another data time sequence. The first optical signal with m wavelengths is output at a same moment, where one wavelength may correspond to a plurality of bits. According to a sequence of bits in the data signal, the first optical signal with m wavelengths modulated by using a plurality of bits is output at each moment, and is output sequentially. Multi-wavelength air interface waveforms are output in parallel to implement high-speed transmission of the data signal.

The following then describes the internal structure of the transmitter in detail.

The signal processing unit 310 of the foregoing transmitter 300 may include an electrical signal generation subunit 311 and a multi-wavelength processing subunit 312, where an output end of the electrical signal generation subunit 311 is connected to an input end of the multi-wavelength processing subunit 312. The electrical signal generation subunit 311 is configured to: generate an electrical signal, where the electrical signal is divided into a digital signal D and a wavelength control signal S; and output the digital signal D and the wavelength control signal S to the multi-wavelength processing subunit 312. The electrical signal generation subunit 311 may be implemented by a digital chip such as a field programmable gate array (field programmable gate array, FPGA) or an application-specific integrated circuit (application-specific integrated circuit, ASIC). A multi-wave processing unit includes a light source, for example, a component such as a tunable light source. The digital signal D is directly or indirectly used to modulate an amplitude of the tunable light source, and the wavelength control signal S may be used to adjust the light source in real time to output the first optical signal with m wavelengths. The first optical signal with m wavelengths is used to carry the electrical signal. Optionally, the electrical signal includes the synchronization signal and the data signal. The data signal is directly or indirectly used to modulate the first optical signal with m wavelengths in a manner of the digital signal D. The synchronization signal may be defined by using a training sequence or a wavelength polling pattern. When the synchronization signal is defined by using the training sequence, first optical signal with some or all of the m wavelengths may be directly or indirectly modulated in the manner of the digital signal D. When the synchronization signal is defined by using the wavelength polling pattern, output of the first optical signal carrying the synchronization signal may be controlled in a manner of the wavelength control signal S. The optical output unit 320 of the transmitter 300 may use an optical lens, may transmit, to an air interface, the first optical signal with m wavelengths output by the signal processing unit 310, and may perform a collimation operation, a disperse operation, an angle adjustment operation, or the like on a light beam. A specific implementation form of the optical lens includes but is not limited to a lens, a collimation lens, a micro-electro-mechanical system (micro-electro-mechanical system, MEMS) oscillator, a grating, and the like.

In an optional implementation, FIG. 7 is a schematic diagram of a structure of the transmitter 300. The multi-wavelength processing subunit 312 of the transmitter 300 includes a first tunable light source, and the lens is used to represent the optical output unit 320 of the transmitter 300. The first tunable light source outputs, under control of the wavelength control signal S, the first optical signal with m wavelengths, for example, *λ*₁, *λ*₂, ..., and *λₘ.* Optionally, the first tunable light source may be implemented by an LED, an LD, or the like. In an example, FIG. 7 shows that the data signal D is directly used to modulate an amplitude of the first tunable light source. However, this does not indicate that this is limited in this embodiment of this application.

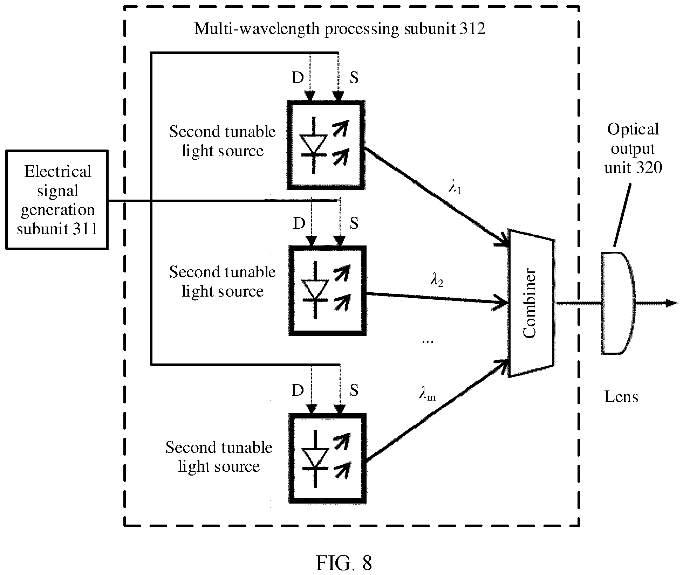

In another optional implementation, the multi-wavelength processing subunit 312 of the transmitter 300 includes a plurality of second tunable light sources. Each second tunable light source may output, under control of the wavelength control signal S, a first optical signal with one wavelength, and wavelengths of a first optical signal output by different second tunable light sources may be the same or may be different. Optionally, the second tunable light source may be implemented by a light emitting diode (light emitting diode, LED), a laser diode (laser diode, LD), or the like. For example, the lens is used to represent the optical output unit 320 of the transmitter 300. Refer to a schematic diagram of a structure of the transmitter 300 shown in FIG. 8. For m second tunable light sources in the transmitter 300, wavelengths of an optical signal output by different second tunable light sources are different, for example, *λ*₁, *λ*₂, ..., and *λₘ* shown in FIG. 8. Optionally, the multi-wavelength processing subunit 312 may further include a combiner. The combiner may combine multi-wavelength light into one channel shown in FIG. 8 and transmit the light to the lens, and the lens outputs the light.

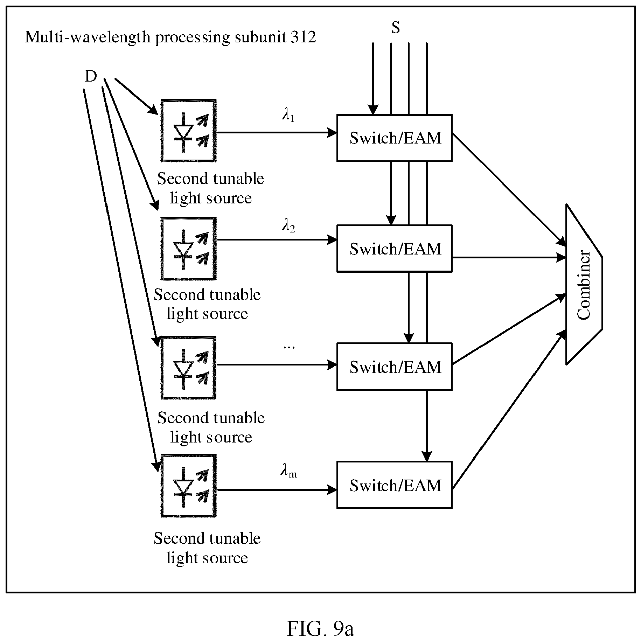

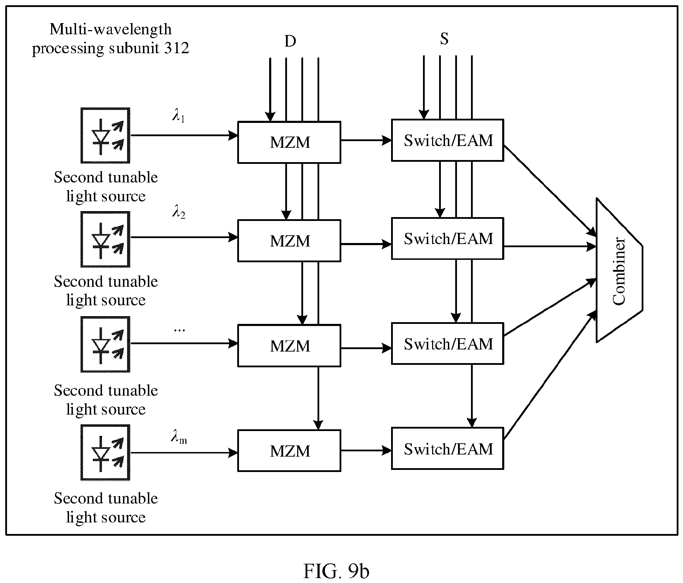

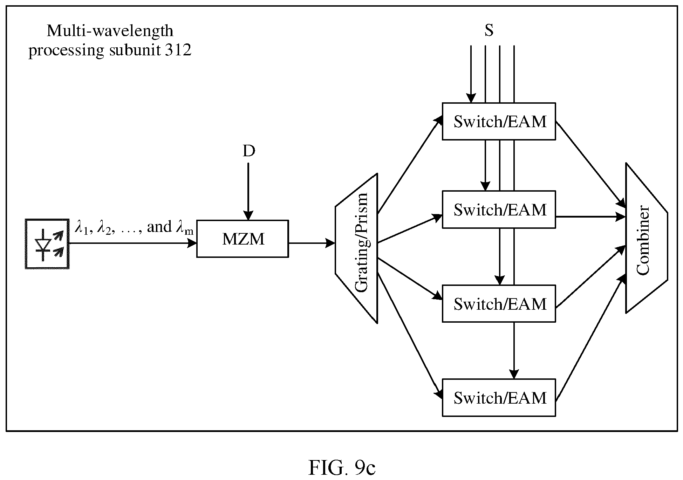

Optionally, in the structure shown in FIG. 8, the wavelength control signal S implements a light source on-off state by controlling a light source voltage. Alternatively, further, structures shown in FIG. 9a, FIG. 9b, and FIG. 9c each are used as the multi-wavelength processing subunit 312 of the transmitter 300, and the wavelength control signal S may implement the light source on-off state by controlling an external switch or an EAM. The following provides detailed descriptions with reference to FIG. 9a, FIG. 9b, and FIG. 9c.

As shown in FIG. 9a, the multi-wavelength processing subunit 312 includes m second tunable light sources and m switches/EAMs, where the m second tunable light sources are in one-to-one correspondence with the m switches/EAMs. For any second tunable light source, the wavelength control signal S may control an on-off state of the second tunable light source by using a switch/an EAM corresponding to the wavelength control signal S. Optionally, the digital signal D may be directly used to modulate amplitudes of the m second tunable light sources, or may be directly used to modulate an amplitude of a second tunable light source that is in an on state in the m second tunable light sources. It should be noted that FIG. 9a is merely used as an example to show that the digital signal is directly used to modulate the amplitudes of the m second tunable light sources. However, this does not indicate that this is limited in this embodiment of this application. In addition, optionally, the multi-wavelength processing subunit 312 further includes a combiner, which is also shown in FIG. 9a.

In FIG. 9b, a Mach-Zehnder modulator MZM is introduced based on FIG. 9a. The digital signal D controls the MZM, and is used to indirectly modulate the amplitude of the second tunable light source by using the MZM. FIG. 9b shows the m second tunable light sources and m MZMs, where one MZM corresponds to one second tunable light source. The digital signal D may control any MZM to indirectly modulate a second tunable light source corresponding to the MZM. The multi-wavelength processing subunit 312 further includes m switches/EAMs, where the m second tunable light sources are in one-to-one correspondence with the m switches/EAMs, and the wavelength control signal S may implement the light source on-off state by controlling the external switch or the EAM. In addition, optionally, the multi-wavelength processing subunit 312 further includes a combiner, which is also shown in FIG. 9b.

In FIG. 9c, a single Mach-Zehnder modulator MZM is introduced based on FIG. 8. The digital signal D controls the single MZM, and is used to indirectly modulate an amplitude of a first tunable light source by using the single MZM, to generate light with a plurality of wavelengths, for example, *λ*₁, *λ*₂, ..., and *λₘ*. FIG. 9c shows that the multi-wavelength processing subunit 312 includes the first tunable light source and the single MZM, and the digital signal D may control the foregoing MZM to indirectly modulate the first tunable light source. The multi-wavelength processing subunit 312 further includes an optical wave division component, for example, a prism/grating shown in FIG. 9c. The light with a plurality of wavelengths modulated by the MZM is divided into a plurality of channels of light by using the optical wave division component, and each channel of light corresponds to one external switch or one EAM. The wavelength control signal S may control the external switch or the EAM to implement a light source on-off state of one channel of light corresponding to the wavelength control signal S. In addition, optionally, the multi-wavelength processing subunit 312 further includes a combiner, which is also shown in FIG. 9c.

In the foregoing embodiment provided in this application, the multi-wavelength processing subunit 312 of the transmitter 300 may implement high-speed mapping of digital signals to different optical carriers, to meet a requirement of high-speed multi-wavelength fluorescence reception on air interface waveform transmission.

The following describes the internal structure of the receiver 400 and communication between the units in detail.

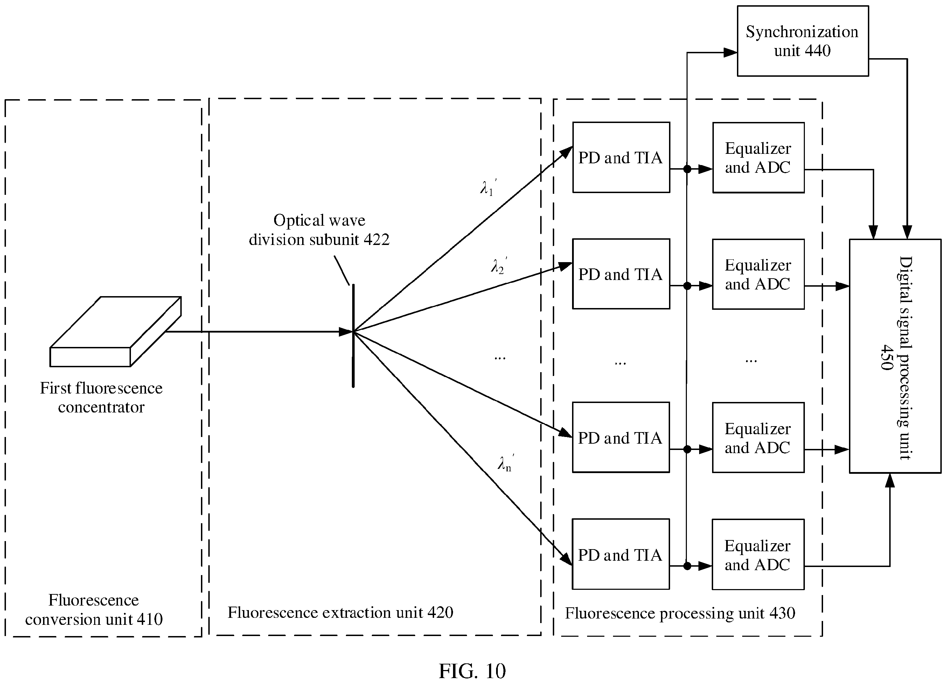

Solution 1: Refer to FIG. 10. An embodiment of this application provides a receiver 400. The receiver 400 includes a fluorescence conversion unit 410, a fluorescence extraction unit 420, and a fluorescence processing unit 430.

Fluorescence conversion unit 410: The fluorescence conversion unit 410 includes a first fluorescence concentrator, the first fluorescence concentrator includes p types of fluorescence materials, each type of fluorescence material absorbs an optical signal and excites a fluorescence signal, wavelengths of fluorescence signals excited by different types of fluorescence materials are different, and the p types of fluorescence materials absorb a first optical signal with m wavelengths, where p is a positive integer. The fluorescence conversion unit 410 is specifically configured to: convert the first optical signal with m wavelengths into a first fluorescence signal by using the first fluorescence concentrator, and output the first fluorescence signal, where the first fluorescence signal includes a fluorescence signal with p wavelengths.

Optionally, a single component of the first fluorescence concentrator is doped with a plurality of types of fluorescence materials, and all the types of fluorescence materials have different fluorescence excitation spectrums or fluorescence emission spectrums, may absorb multi-wavelength optical signals, for example, absorb the first optical signal with m wavelengths, and excite the first fluorescence signal. A geometric structure of the first fluorescence concentrator may be a rectangle, a parabolic shape, a circle, a sphere, or the like. Doping of the plurality of types of fluorescence materials may enhance a capability of the first fluorescence concentrator to process multi-wavelength optical signals. In an example, the geometric structure of the first fluorescence concentrator shown in FIG. 10 is a rectangle. However, it may be understood that this embodiment of this application is not limited to this example.

Optionally, the fluorescence material includes but is not limited to one or more of an organic fluorescence material, a quantum dot fluorescence material, perovskite, a rare earth, and a superlattice fluorescence material. Different fluorescence materials may refer to finer classifications of any one of the foregoing materials, for example, different perovskite; or different types of fluorescence materials may refer to the foregoing different types, for example, the rare earth and the superlattice fluorescence material. The following describes the foregoing fluorescence materials in detail.

(1) Quantum dot fluorescence material: In a semiconductor material, a micro crystal is usually referred to as a quantum dot (quantum dot). The quantum dot can lock electrons in very small three-dimensional space. When a beam of light is irradiated to the space, the electrons are excited and jump to a higher energy level. When the electrons return to an originally low energy level, the electrons emit a light beam with a specific wavelength. (2) Perovskite: A perovskite material is a type of material with a same crystal structure as the calcium titanate (CaTiO3). A structural formula of the perovskite material is usually ABX3, where A and B are two cations and X is an anion. The crystal structure makes the material have physicochemical properties such as light absorption and electrocatalytic, and has many applications in chemical and physical fields. (3) Rare earth: A rare earth fluorescence material is a fluorescence material mainly composed of a rare earth element (a general term of 17 elements such as scandium in the IIIB family of the periodic table of the elements). Oxides of high-purity rare earths such as yttrium, europium, gadolinium, lanthanum, cerium, terbium, and ytterbium can be used to synthesize various phosphors, including various display component phosphors, lamp phosphors, light-retaining afterglow phosphors, light-emitting diode phosphors, X-ray intensifying screen phosphors, and the like. (4) Organic fluorescence material: There are various types of organic small molecular luminescent materials, and most of which have conjugate heterocycle and various chromophores. Structures of the materials are easy to adj ust. Conjugate lengths of the materials are changed by introducing various chromophores and unsaturated groups such as ethylene bond and benzene ring, thereby changing the photoelectric properties of the compounds. (5) Superlattice fluorescence material: The material includes a periodic interlayer structure including two or more materials, where the thickness of each layer is usually in nanometer order, and is a material having a photoluminescence fluorescence effect based on the structure.

Fluorescence extraction unit 420: The fluorescence extraction unit 420 includes an optical wave division subunit 422. The optical wave division subunit 422 is configured to divide the received first fluorescence signal into n channels of fluorescence signals, where n is equal to p, wavelengths of the n channels of fluorescence signals are in one-to-one correspondence with the p wavelengths, and propagation directions of fluorescence signals in different channels are different. A multi-wavelength processing capability of the receiver is implemented by using the optical wave division subunit.

Optionally, the optical wave division subunit 422 may divide the first fluorescence signal based on different wavelengths by using a grating and a prism/an optical splitter. In an example, FIG. 10 merely shows that the optical wave division subunit 422 includes a grating/prism. The first fluorescence signal output by the first fluorescence concentrator is divided into the n channels of fluorescence signals by the foregoing optical wave division subunit 422, where the wavelengths are respectively *λ*₁^{'}, *λ*₂^{'}, ..., and *λₙ*^{'}. However, it may be understood that this embodiment of this application is not limited to this example. Optionally, after performing frequency conversion processing on the received first fluorescence signal, the optical wave division subunit 422 may then divide, based on different wavelengths, the first fluorescence signal on which frequency conversion has been performed. During specific implementation, a frequency conversion processing component or a frequency conversion processing subunit may be deployed in the optical wave division subunit 422. For example, a non-linear photonic crystal is used to implement a frequency conversion processing function. Frequency conversion processing may control fluorescence wavelengths, and reduce interference between fluorescence with different wavelengths. Optionally, a light source whose wavelength is tunable or a light source whose wavelength is non-tunable may be disposed, and a frequency conversion part, namely, the frequency conversion processing subunit, performs frequency combination or frequency difference processing on light output by the light source and a plurality of pieces of fluorescence light, to implement a frequency conversion function. In this embodiment of this application, wavelengths of multi-wavelength fluorescence are equivalently controlled through frequency conversion processing, so that fluorescence signals with different wavelengths are distinguished, and the multi-wavelength fluorescence is divided through frequency division or space division. In addition, the architecture can improve receiver sensitivity.

Fluorescence processing unit 430: The fluorescence processing unit 430 includes n optical-to-electrical conversion subunits 431, where the n optical-to-electrical conversion subunits 431 are in one-to-one correspondence with the n channels of fluorescence signals. The fluorescence processing unit 430 is further configured to convert the n channels of fluorescence signals into n channels of electrical signals by using the n optical-to-electrical conversion subunits 431. Optionally, each optical-to-electrical conversion subunit 431 may use a PD to implement conversion from a fluorescence signal to an electrical signal. A specific implementation of the PD may be a PIN-PD or an APD. This is not limited in this embodiment of this application. Optionally, each optical-to-electrical conversion subunit 431 may further include a TIA integrated with the PD, the TIA is used to amplify the electrical signal, and a function of the TIA is to amplify the electrical signal output by the PD. Optionally, a drive amplifier may be further considered to provide a higher gain.

Optionally, the fluorescence processing unit 430 further includes an electrical signal processing subunit 432, and output ends of the n optical-to-electrical conversion subunits 431 are connected to an input end of the electrical signal processing subunit 432. The electrical signal processing subunit 432 is configured to perform one or more operations of combination, amplification, and equalization on the n channels of electrical signals. Optionally, when the optical-to-electrical conversion subunit 431 includes no TIA, the electrical signal processing subunit 432 may specifically use the TIA to amplify the electrical signal. A function of the TIA is to amplify the electrical signal output by the PD. Optionally, a drive amplifier may be further considered to provide a higher gain. The electrical signal processing subunit 432 may specifically use an equalizer to perform amplitude adjustment on the electrical signal responded by the fluorescence signal with different wavelengths, to ensure that a processing gain of the fluorescence signal with different wavelengths is consistent. An implementation of the equalizer may be a tunable amplifier or a voltage-controlled attenuator. This is not limited in this embodiment of this application. In an example, FIG. 10 shows that the fluorescence processing unit 430 specifically includes n PDs and n TIAs, where each PD is associated with one TIA, and the n channels of fluorescence signals are converted into the n channels of electrical signals and are amplified for output. It may be understood that one optical-to-electrical conversion subunit 431 includes at least one of a PD and a TIA. In FIG. 10, one "PD, TIA" is used to represent one optical-to-electrical conversion subunit 431. The fluorescence processing unit 430 further includes n equalizers, where the n equalizers are in one-to-one correspondence with the n PDs. Each equalizer is configured to receive one channel of electrical signal, and different equalizers receive different channels of electrical signals. The electrical signal processing subunit 432 includes n equalizers, and may implement parallel amplitude adjustment on the n channels of electrical signals by using the n equalizers. FIG. 10 does not show the electrical signal processing subunit 432.

Optionally, the first optical signal with m wavelengths output by the transmitter is used to carry a synchronization signal, and the synchronization signal is used to determine a time sequence for sending a data signal by the transmitter. As described above, if the transmitter sends a first optical signal with j of the m wavelengths at different moments (in serial), and the first optical signal with j wavelengths is used to carry the synchronization signal, the receiver 400 receives the first optical signal with j of the m wavelengths from the transmitter at different moments, to obtain the synchronization signal of the transmitter, where j is a positive integer, j is greater than 1, and j is less than or equal to m. If the transmitter sends a first optical signal with j of the m wavelengths at a same moment (in parallel), and the first optical signal with j wavelengths is used to carry the synchronization signal, the receiver 400 receives the first optical signal with j of the m wavelengths from the transmitter at a same moment, to obtain the synchronization signal of the transmitter, where j is a positive integer, j is greater than 1, and j is less than or equal to m.

Based on this, the electrical signal processing subunit 432 is further configured to: obtain the synchronization signal based on the n channels of electrical signals, and determine, based on the synchronization signal, the time sequence for sending the data signal by the transmitter. The n channels of electrical signals herein may be n channels of electrical signals output by the optical-to-electrical conversion subunit 431, or may be, for example, n channels of electrical signals that are amplified and/or equalized. In other words, this embodiment of this application describes only synchronization processing performed based on the electrical signal responded by the fluorescence signal. A synchronization processing procedure may be performed before or after the electrical signal is further adjusted. This is not limited in this embodiment of this application. Optionally, a processing component for dedicated synchronization processing, for example, a synchronization unit, may be separately deployed on a side of the receiver 400. A main function of the synchronization unit is to determine the synchronization signal or a fluorescence wavelength, and determine the time sequence for sending the data signal, so that the equalizer can equalize electrical signals responded by different wavelengths. In this embodiment of this application, the synchronization unit may compare the received electrical signal with a preconfigured synchronization signal, for example, a training sequence or a wavelength polling pattern. The preconfigured synchronization signal may be locally stored by the receiver 400, and is consistent with the synchronization signal generated by the transmitter. If the comparison succeeds, it is determined that the synchronization succeeds. In addition, the synchronization unit may also determine the electrical signals responded by different wavelengths, and provide amplitudes and delay compensation values corresponding to different wavelengths. The synchronization unit may be implemented by a circuit such as a clock, a comparator, or a wave detector. In an example, FIG. 10 specifically shows a deployment location of a synchronization unit 440, and n "PDs, TIAs" are used to represent n optical-to-electrical conversion subunits 431. In this case, an output end of each of the n "PDs, TIAs" is connected to an input end of the synchronization unit 440.

Optionally, the first optical signal with m wavelengths output by the transmitter is used to carry the data signal. As described above, if the transmitter sends the first optical signal with m wavelengths at different moments, and the first optical signal with m wavelengths is used to carry the data signal, the receiver 400 may receive the first optical signal with m wavelengths from the transmitter at different moments, to obtain the data signal of the transmitter, where j is a positive integer, j is greater than 1, and j is less than or equal to m.

In addition, optionally, the electrical signal processing unit 432 may further include an ADC, and the ADC and the equalizer may be deployed in an integrated manner. As shown in FIG. 10, each of the n equalizers is associated with one ADC, and the ADC is configured to convert an electrical signal into a digital signal. The receiver 400 may further include a digital signal processing unit 450. An input end of the digital signal processing unit may be connected to output ends of the fluorescence processing unit 430 and the synchronization unit 440. After receiving the electrical signal, the synchronization unit 440 first performs synchronization determining, and feeds back, to the digital signal processing unit 450 when the determination succeeds, a synchronization indication, for example, the time sequence for sending the data signal. In this case, after receiving the synchronization indication, the digital signal processing unit performs digital signal processing on n channels of digital signals output by n ADCs, and completes basic functions such as demodulation. Optionally, the data signal processing unit 450 may be implemented by a digital chip such as an FPGA or an ASIC.

In this embodiment of this application, the first fluorescence concentrator absorbs multi-wavelength light and converts the multi-wavelength light into multi-wavelength fluorescence light, so that an optical signal can be received at a large field of view, thereby reducing limitations on movement and a posture change of a device in which the receiver is located. A plurality of channels of fluorescence signals are divided for processing, so that interference between fluorescence signals with different wavelengths can be avoided, and a system rate and signal processing performance can be improved.

Solution 2: An embodiment of this application provides a receiver 400. The receiver 400 includes a fluorescence conversion unit 410, a fluorescence extraction unit 420, and a fluorescence processing unit 430. For functions and structures of the fluorescence conversion unit 410 and the fluorescence processing unit 430 in this solution, refer to Solution 1. Details are not described in this embodiment of this application again. The following focuses on the fluorescence extraction unit 420 in this solution.

The fluorescence extraction unit 420 includes a first light concentrator subunit 421 and an optical wave division subunit 422. The first light concentrator subunit 421 is configured to: receive a first fluorescence signal output by the fluorescence conversion unit 410, concentrate the first fluorescence signal, and output the concentrated first fluorescence signal to the optical wave division subunit 422. The optical wave division subunit 422 is configured to divide the received first fluorescence signal into n channels of fluorescence signals, where n is equal to p, wavelengths of the n channels of fluorescence signals are in one-to-one correspondence with p wavelengths, and propagation directions of fluorescence signals in different channels are different. The optical wave division subunit 422 in this solution may be implemented with reference to the optical wave division subunit 422 mentioned in Solution 1.

Further, optionally, the fluorescence extraction unit 420 of the receiver 400 includes n second light concentrator subunits and/or n filter subunits, each light concentrator subunit is configured to concentrate a fluorescence signal with one wavelength, and each filter subunit is configured to filter a fluorescence signal with one wavelength. The n channels of fluorescence signals are respectively concentrated by the n second light concentrator subunits and then output; the n channels of fluorescence signals are respectively filtered by the n filter subunits and then output; or the n channels of fluorescence signals are respectively concentrated by the n second light concentrator subunits, filtered by the n filter subunits, and then output.

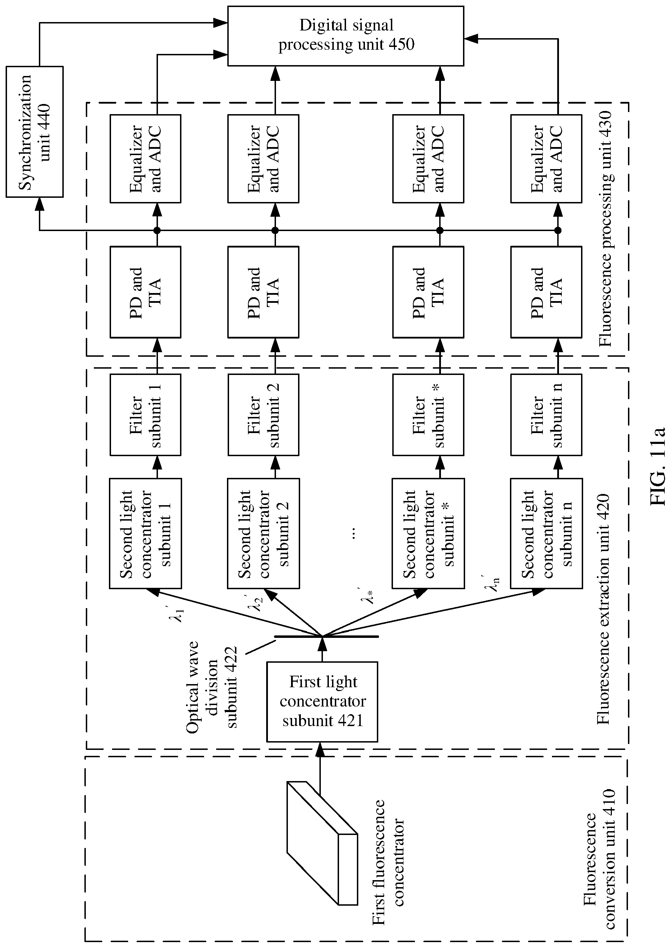

In an example, FIG. 11a specifically shows that the fluorescence extraction unit 420 includes the first light concentrator subunit 421, the optical wave division subunit 422 uses a grating/prism, and the first fluorescence signal output by the first light concentrator subunit 421 is divided into the n channels of fluorescence signals by the foregoing optical wave division subunit 422, where wavelengths are respectively *λ*₁^{'}, *λ*₂^{'}, *λ*_{∗}^{'}, ..., and *λₙ^{'}*. It should be noted that "∗" represents an intermediate quantity greater than 2 and less than n. The fluorescence extraction unit 420 further includes the n second light concentrator subunits, which are respectively a second light concentrator subunit 1, a second light concentrator subunit 2, ..., and a second light concentrator subunit n. The fluorescence extraction unit 420 further includes the n filter subunits, which are respectively a filter subunit 1, a filter subunit 2, ..., and a filter subunit n. The fluorescence signal with *λ*₁^{'} divided by the foregoing optical wave division subunit 422 is filtered and output by the second light concentrator subunit 1 and the filter subunit 1, the fluorescence signal with *λ*₂^{'} is filtered and output by the second light concentrator subunit 2 and the filter subunit 2, ..., and the fluorescence signal with *λₙ*^{'} is filtered and output by the second light concentrator subunit n and the filter subunit n. Effective transmission of fluorescence signals can be enhanced through concentration processing, and interference between fluorescence signals with different wavelengths can be avoided through filtering processing, thereby improving system performance.

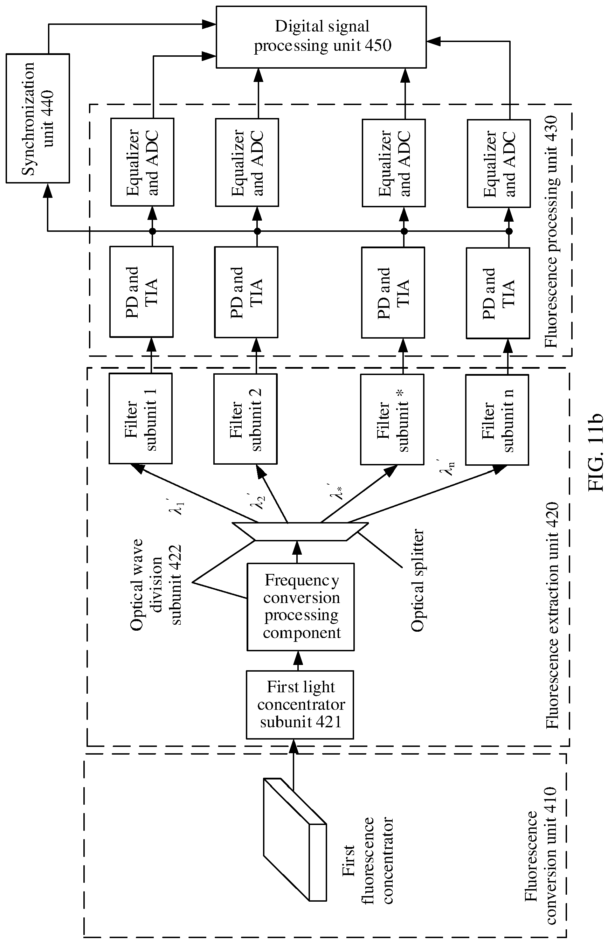

In another example, FIG. 11b specifically shows that the fluorescence extraction unit 420 includes the first light concentrator subunit 421, the optical wave division subunit 422 includes a frequency conversion processing component and an optical splitter (or a grating/prism), and the first fluorescence signal output by the first light concentrator subunit 421 is divided into the n channels of fluorescence signals by the foregoing optical wave division subunit 422, where wavelengths are respectively *λ*₁^{'}, *λ*₂^{'}, *λ*∗^{'}, ..., and *λₙ*^{'}. It should be noted that "∗" represents an intermediate quantity greater than 2 and less than n. The fluorescence extraction unit 420 further includes the n filter subunits, which are respectively a filter subunit 1, a filter subunit 2, ..., and a filter subunit n. The fluorescence signal with *λ*₁^{'} divided by the foregoing optical wave division subunit 422 is filtered by the filter subunit 1 and output, the fluorescence signal with *λ*₂^{'} is filtered by the filter subunit 2 and output, ..., and the fluorescence signal with *λₙ*^{'} is filtered by the filter subunit n and output. A plurality of channels of fluorescence signals are divided, and the plurality of channels of fluorescence signals are filtered in parallel, so that interference between fluorescence signals with different wavelengths can be further reduced.

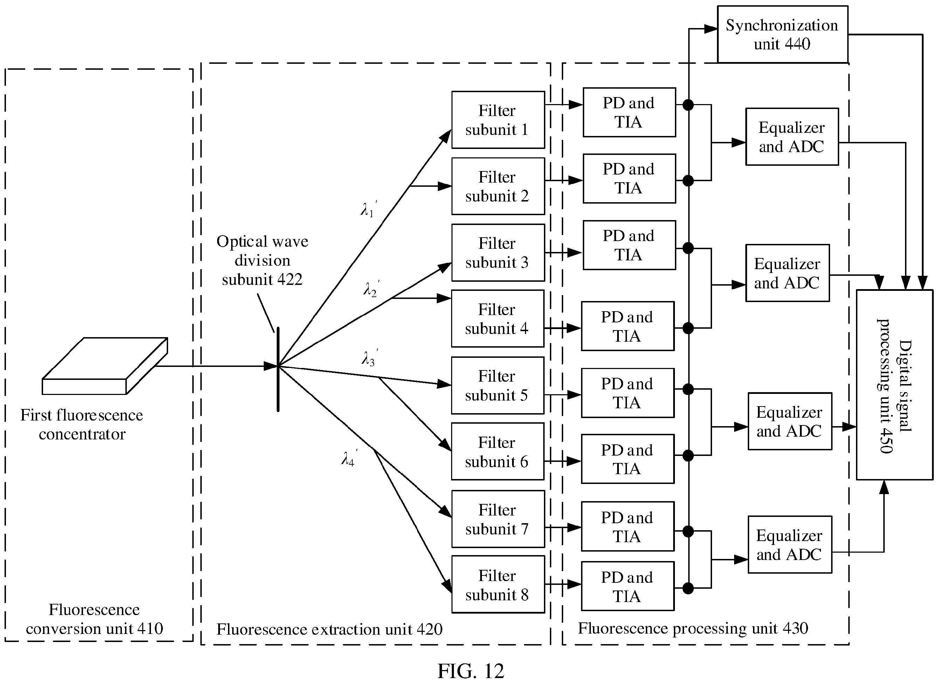

Solution 3: Refer to FIG. 12. An embodiment of this application provides a receiver 400. The receiver 400 includes a fluorescence conversion unit 410, a fluorescence extraction unit 420, and a fluorescence processing unit 430. For a function and a structure of the fluorescence conversion unit 410 in this solution, refer to Solution 1. Details are not described in this embodiment of this application again. The following focuses on the fluorescence extraction unit 420 and the fluorescence processing unit 430 in this solution.

Fluorescence extraction unit 420: The fluorescence extraction unit 420 includes an optical wave division subunit 422 and n filter subunits, and each filter subunit is configured to filter a fluorescence signal with one wavelength. The optical wave division subunit 422 is configured to divide a received first fluorescence signal into p channels of fluorescence signals, where wavelengths of fluorescence signals in different channels are different, and propagation directions of fluorescence signals in different channels are different; and n channels of fluorescence signals are generated after the p channels of fluorescence signals are filtered by the n filter subunits, where each channel of the p channels of fluorescence signals is filtered by at least one of the n filter subunits, and n is greater than or equal to p. In an example, the optical wave division subunit 422 shown in FIG. 12 uses a grating/prism, but may alternatively be the optical wave division subunit 422 described in Solution 1, and this is not limited in Solution 3. In addition, FIG. 12 uses an example in which p is 4 and n is 8, to show four channels of fluorescence signals divided by the optical wave division subunit 422, where wavelengths are respectively *λ*₁^{'}, *λ*₂^{'}, *λ*₃^{'}, and *λ*₄^{'}. Each channel of fluorescence signals is filtered by two of eight filter subunits. Specifically, one channel of fluorescence signals with *λ*₁^{'}, is filtered by a filter subunit 1 and a filter subunit 2 and then output to two channels of fluorescence signals with *λ*₁^{'}. For example, one channel of fluorescence signals with *λ*₂^{'} is filtered by a filter subunit 3 and a filter subunit 4 and then output to two channels of fluorescence signals with *λ*₂^{'}. In this way, the p channels of fluorescence signals are converted into the n channels of fluorescence signals and output.

Optionally, the fluorescence extraction unit 420 further includes a first light concentrator subunit 421. The first light concentrator subunit 421 is configured to: receive the first fluorescence signal output by the fluorescence conversion unit 410, concentrate the first fluorescence signal, and then output the concentrated first fluorescence signal to the optical wave division subunit 422. FIG. 12 does not show the first light concentrator subunit 421.

Fluorescence processing unit 430: The fluorescence processing unit includes n optical-to-electrical conversion subunits and an electrical signal processing subunit, where the n optical-to-electrical conversion subunits are in one-to-one correspondence with the n channels of fluorescence signals. The fluorescence processing unit is further configured to convert the n channels of fluorescence signals into n channels of electrical signals by using the n optical-to-electrical conversion subunits. Specifically, each optical-to-electrical conversion subunit corresponds to one channel of fluorescence signal output by one filter subunit. FIG. 12 uses an example in which n is 8, to show eight optical-to-electrical conversion subunits. A structure of each optical-to-electrical conversion subunit is consistent with that described in Solution 1, and details are not described herein again. Further, FIG. 12 shows a process of combining eight channels of optical signals. Specifically, corresponding fluorescence signals with a same wavelength are combined into one channel. For example, two channels of electrical signals converted from two channels of fluorescence signals with a wavelength of *λ*₁^{'} are combined into one channel, two channels of electrical signals converted from two channels of fluorescence signals with a wavelength of *λ*₂^{'} are combined into one channel, and so on. Finally, eight channels of electrical signals output by the eight optical-to-electrical conversion subunits are combined into four channels of electrical signals, and four channels of optical signals are input to a synchronization unit 440 shown in FIG. 12 and four "equalizers, ADCs" included in the electrical signal processing subunit. The four channels of optical signals undergo processing procedures such as synchronization determining and equalization/analog-to-digital conversion involved in Solution 1. As described in Solution 1, after receiving the synchronization indication from the synchronization unit 440 to determine synchronization, the digital signal processing unit 450 performs processing such as analysis and demodulation on the received electrical signal/digital signal that is converted through analog-to-digital conversion.

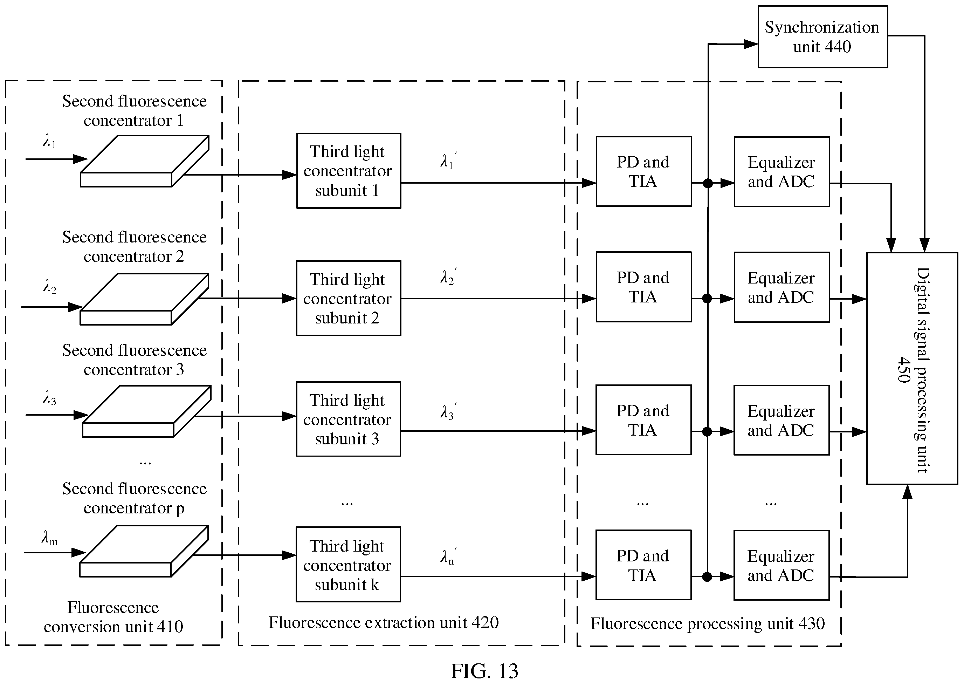

Solution 4: Refer to FIG. 13. An embodiment of this application provides a receiver 400. The receiver 400 includes a fluorescence conversion unit 410, a fluorescence extraction unit 420, and a fluorescence processing unit 430. For a function and a structure of the fluorescence processing unit 430 in this solution, refer to Solution 1. Details are not described in this embodiment of this application again. The following focuses on the fluorescence conversion unit 410 and the fluorescence extraction unit 420 in this solution.

Fluorescence conversion unit 410: The fluorescence conversion unit 410 includes p second fluorescence concentrators, where each second fluorescence concentrator is configured to: receive a first optical signal with a set wavelength, convert the first optical signal with a set wavelength into a one channel of fluorescence signals, and output the one channel of fluorescence signals. The p second fluorescence concentrators receive a first optical signal with m wavelengths from a transmitter, and the set wavelength is one of the m wavelengths. Wavelengths of optical signals received by different second fluorescence concentrators in the p second fluorescence concentrators are different, where p is equal to m, and p is a positive integer.

The fluorescence conversion unit 410 is specifically configured to: convert, by using the p second fluorescence concentrators, the first optical signal with m wavelengths into a first fluorescence signal including p channels of fluorescence signals, and output the p channels of fluorescence signals, where wavelengths of fluorescence signals in a same channel are the same. In the receiver 400 shown in FIG. 13, the fluorescence conversion unit 410 includes the p second fluorescence concentrators. Each second fluorescence concentrator receives a first optical signal with one of the m wavelengths from the transmitter, and outputs one channel of fluorescence signal. For example, a second fluorescence concentrator 1 receives a first optical signal with a wavelength of *λ*₁, and outputs one channel of fluorescence signal with a wavelength of *λ*₁^{'}. A second fluorescence concentrator 2 receives a first optical signal with a wavelength of *λ*₂. and outputs one channel of fluorescence signal with a wavelength of *λ*₂^{'}. A second fluorescence concentrator 3 receives a first optical signal with a wavelength of *λ*₃, and outputs one channel of fluorescence signal with a wavelength of *λ*₃^{'}. A second fluorescence concentrator p receives a first optical signal with a wavelength of *λₘ*, and outputs one channel of fluorescence signal with a wavelength of *λₘ^{'}*.

Optionally, one type of fluorescence material is added to each second fluorescence concentrator, and a light filter layer is disposed in the second fluorescence concentrator to receive a first optical signal with one wavelength. Optionally, a fluorescence material that can be added to any second fluorescence concentrator may be one type of an organic fluorescence material, a quantum dot fluorescence material, perovskite, a rare earth, or a superlattice fluorescence material, or may be another fluorescence material. This is not limited in this embodiment of this application.

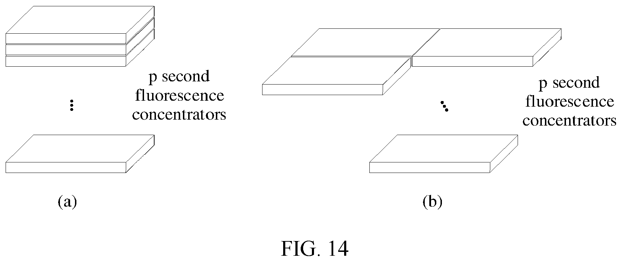

Optionally, the p second fluorescence concentrators are arranged in a stack manner or in an interleaving manner. Refer to a schematic diagram of arrangement of second fluorescence concentrators shown in FIG. 14. One rectangle is used to represent one second fluorescence concentrator. (a) in FIG. 14 specifically shows that the p second fluorescence concentrators are vertically stacked, and (b) in FIG. 14 shows that the p second fluorescence concentrators are horizontally interleaved. In this way, multi-wavelength optical signals can be effectively received in a small area or in a same area.

Fluorescence extraction unit 420: The fluorescence extraction unit 420 includes k third light concentrator subunits, and each third light concentrator subunit is configured to: receive at least one channel of fluorescence signals with a same wavelength in the p channels of fluorescence signals, and concentrate the at least one channel of fluorescence signals with a same wavelength, where different third light concentrator subunits receive fluorescence signals output by different second fluorescence concentrators, k is less than or equal to p, and k is a positive integer. In an example, FIG. 13 shows a case in which k is equal to p. A third light concentrator subunit 1 receives the fluorescence signal output by the second fluorescence concentrator 1, a third light concentrator subunit 2 receives the fluorescence signal output by the second fluorescence concentrator 2, a third light concentrator subunit 3 receives the fluorescence signal output by the second fluorescence concentrator 3, and a third light concentrator subunit k receives the fluorescence signal output by the second fluorescence concentrator p.

In addition, if k is equal to n, n channels of fluorescence signals are generated after the p channels of fluorescence signals are concentrated by the k third light concentrator subunits, and in the n channels of fluorescence signals, wavelengths of fluorescence signals in different channels are different. Refer to FIG. 13. The fluorescence extraction unit 420 may output the n channels of fluorescence signals to the fluorescence processing unit 430 by using the k third light concentrator subunits.

Solution 5: Based on Solution 4, an embodiment of this application provides a receiver 400. The receiver 400 includes a fluorescence conversion unit 410, a fluorescence extraction unit 420, and a fluorescence processing unit 430. For functions and structures of the fluorescence conversion unit 410 and the fluorescence processing unit 430 in this solution, refer to Solution 4. Details are not described in this embodiment of this application again. The following focuses on the fluorescence extraction unit 420 in this solution.

On the basis that the fluorescence extraction unit 420 includes the k third light concentrator subunits described in Solution 4, the fluorescence extraction unit 420 further includes a fluorescence adjusting subunit and/or n filter subunits. The fluorescence adjusting subunit is configured to perform an optical wave aggregation operation, a frequency conversion operation, and an optical wave division operation on n channels of fluorescence signals, where the n filter subunits are in one-to-one correspondence with the n channels of fluorescence signals, and each filter subunit is configured to filter a fluorescence signal with one wavelength.

The n channels of fluorescence signals are adjusted by the fluorescence adjusting subunit and then output;
the n channels of fluorescence signals are filtered by the n filter subunits and then output; or
the n channels of fluorescence signals are adjusted by the fluorescence adjusting subunit, filtered by the n filter subunits, and then output.

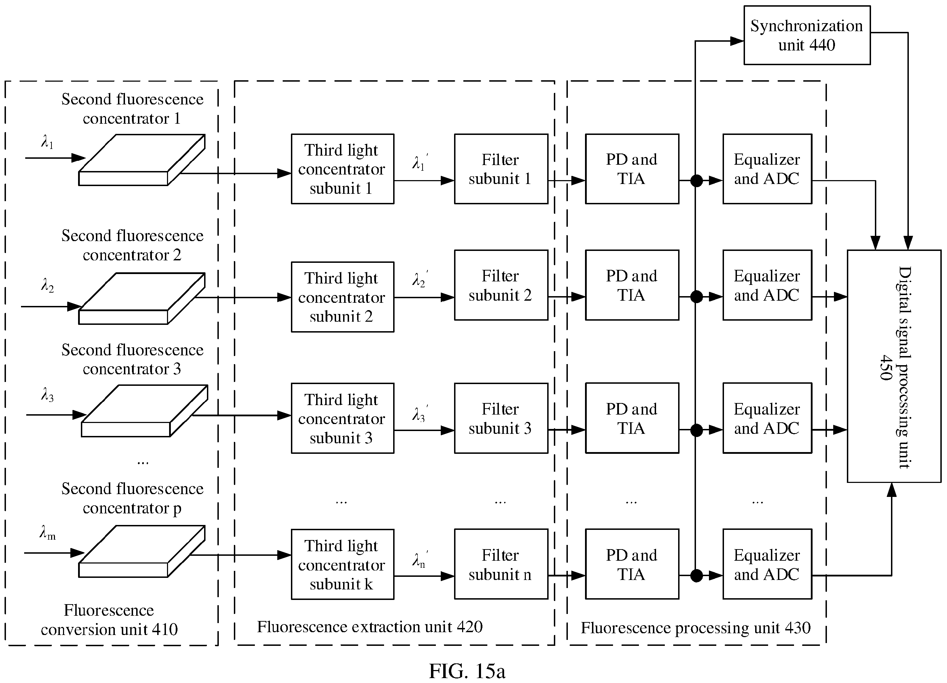

For example, refer to a receiver 400 shown in FIG. 15a. A fluorescence extraction unit 420 of the receiver 400 specifically includes k third light concentrator subunits and n filter subunits, where k is equal to n, and the k third light concentrator subunits are in one-to-one correspondence with the n filter subunits. For example, one channel of fluorescence signal concentrated by a third light concentrator subunit 1 is input to a filter subunit 1 for filtering, one channel of fluorescence signal concentrated by a third light concentrator subunit 2 is input to a filter subunit 2 for filtering, one channel of fluorescence signal concentrated by a third light concentrator subunit 3 is input to a filter subunit 3 for filtering, and one channel of fluorescence signal concentrated by a third light concentrator subunit k is input to a filter subunit n for filtering.

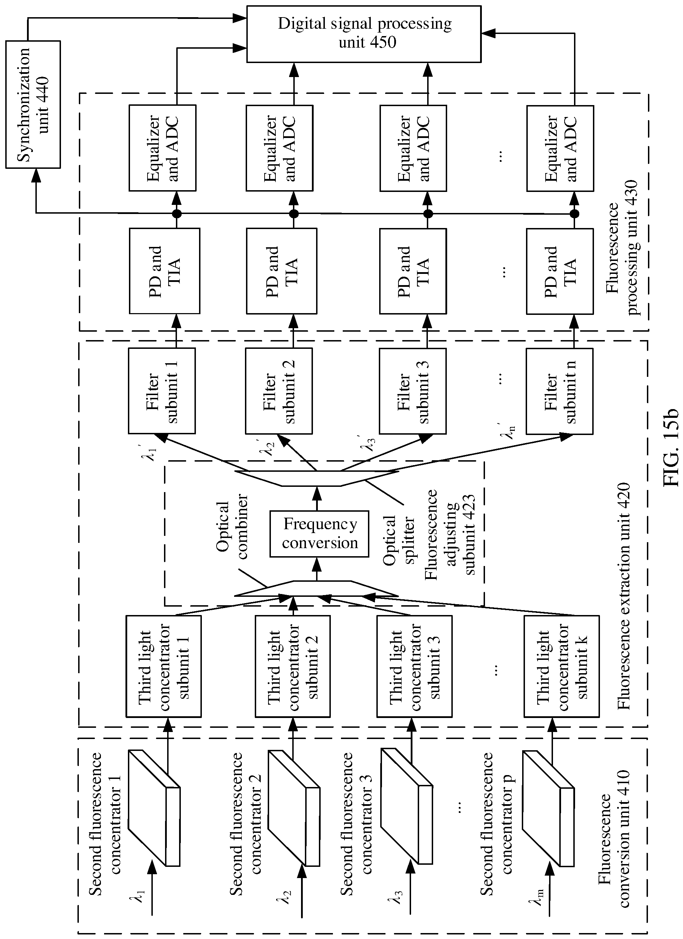

For example, refer to a receiver 400 shown in FIG. 15b. A fluorescence extraction unit 420 of the receiver 400 specifically includes k third light concentrator subunits, a fluorescence adjusting subunit 423, and n filter subunits. As shown in FIG. 15b, the fluorescence adjusting subunit 423 includes an optical combiner, a frequency conversion processing component, and an optical splitter, and k channels of fluorescence signals output by the k third light concentrator subunits are input to the optical combiner for an optical wave aggregation operation and are combined into one channel of fluorescence signals. After the frequency conversion processing component performs a frequency conversion operation on the channel of fluorescence signals, the channel of fluorescence signals is input to the optical splitter, and the optical splitter performs an optical wave division operation to output the channel of fluorescence signals into n channels of fluorescence signals, where k is equal to n. The n channels of fluorescence signals output by the optical splitter are filtered by the n filter subunits and then output. Specifically, one channel of fluorescence signal is output by one filter subunit. FIG. 15b shows a filter subunit 1, a filter subunit 2, a filter subunit 3, ..., and a filter subunit n.

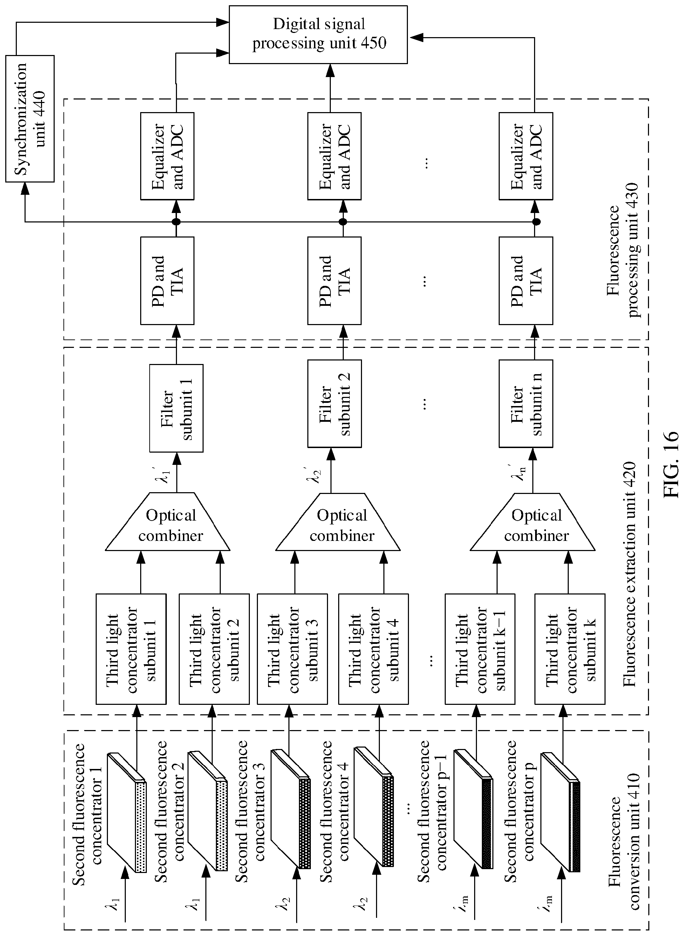

Solution 6: Refer to FIG. 16. An embodiment of this application provides a receiver 400. The receiver 400 includes a fluorescence conversion unit 410, a fluorescence extraction unit 420, and a fluorescence processing unit 430. For a function and a structure of the fluorescence processing unit 430 in this solution, refer to Solution 1. Details are not described in this embodiment of this application again. The following focuses on the fluorescence conversion unit 410 and the fluorescence extraction unit 420 in this solution.

Fluorescence conversion unit 410: The fluorescence conversion unit 410 includes p second fluorescence concentrators, where each second fluorescence concentrator is configured to: receive a first optical signal with a set wavelength, convert the first optical signal with a set wavelength into a one channel of fluorescence signals, and output the one channel of fluorescence signals. The p second fluorescence concentrators receive a first optical signal with m wavelengths from a transmitter, and the set wavelength is one of the m wavelengths. The p second fluorescence concentrators include at least two second fluorescence concentrators, wavelengths of optical signals received by the at least two second fluorescence concentrators are the same, and p is greater than m.

The fluorescence conversion unit 410 is specifically configured to: convert, by using the p second fluorescence concentrators, the first optical signal with m wavelengths into a first fluorescence signal including p channels of fluorescence signals, and output the p channels of fluorescence signals, where wavelengths of fluorescence signals in a same channel are the same. In the receiver 400 shown in FIG. 13, the fluorescence conversion unit 410 includes the p second fluorescence concentrators. Every two second fluorescence concentrators receive a first optical signal with one of the m wavelengths from the transmitter, and output one channel of fluorescence signal. For example, a second fluorescence concentrator 1 and a second fluorescence concentrator 2 receive a first optical signal with a wavelength of *λ*₁, and output one channel of fluorescence signal with a wavelength of *λ*₁^{'}. A second fluorescence concentrator 3 and a second fluorescence concentrator 4 receive a first optical signal with a wavelength of *λ*₂, and output one channel of fluorescence signal with a wavelength of *λ*₂^{'}. A second fluorescence concentrator p-1 and a second fluorescence concentrator p receive a first optical signal with a wavelength of *λₘ*, and output one channel of fluorescence signal with a wavelength of *λₘ*^{'}.

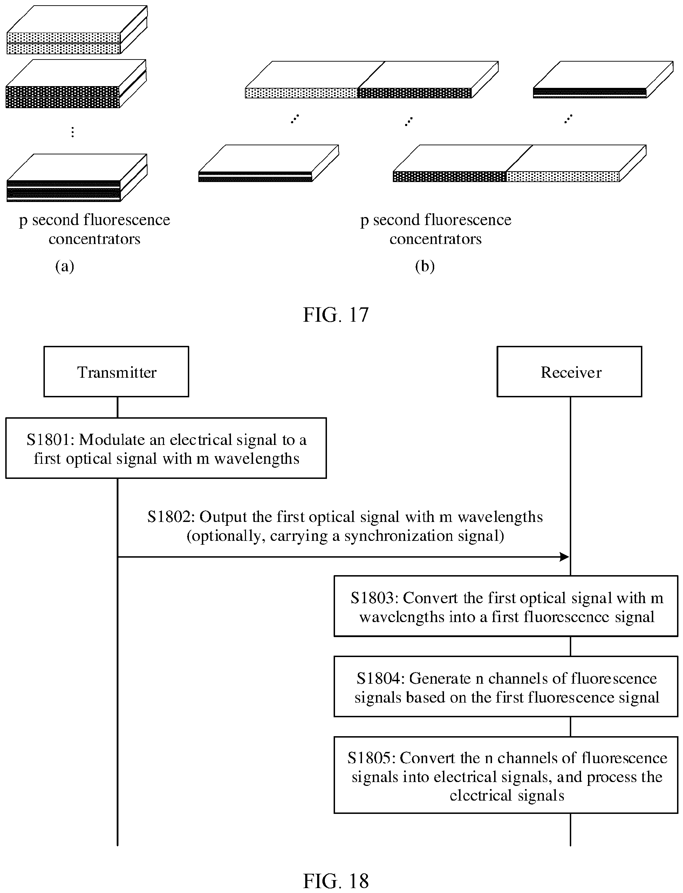

Optionally, one type of fluorescence material is added to each second fluorescence concentrator, and a light filter layer is disposed in the second fluorescence concentrator to receive a first optical signal with one wavelength. Optionally, the p second fluorescence concentrators are arranged in a stack manner or in an interleaving manner. Refer to a schematic diagram of arrangement of second fluorescence concentrators shown in FIG. 17. One rectangle is used to represent one second fluorescence concentrator. Wavelengths of first optical signals received by second fluorescence concentrators that are represented by rectangles filled with a same pattern are the same, and wavelengths of first optical signals received by second fluorescence concentrators that are represented by rectangles filled with different patterns are different. (a) in FIG. 17 specifically shows that the p second fluorescence concentrators are vertically stacked, and (b) in FIG. 17 shows that the p second fluorescence concentrators are horizontally interleaved. The rectangles filled with the same pattern represent second fluorescence concentrators that receive a first optical signal with a same wavelength, and the rectangles filled with different patterns represent second fluorescence concentrators that receive a first optical signal with different wavelengths.

Fluorescence extraction unit 420: The fluorescence extraction unit 420 includes k third light concentrator subunits, and each third light concentrator subunit is configured to: receive at least one channel of fluorescence signals with a same wavelength in the p channels of fluorescence signals, and concentrate the at least one channel of fluorescence signals with a same wavelength, where different third light concentrator subunits receive fluorescence signals output by different second fluorescence concentrators, the k channels of fluorescence signals include at least two channels of fluorescence signals with a same wavelength, k is less than or equal to p, and k is a positive integer. In an example, FIG. 16 shows a case in which k is equal to p and p is an even number. A third light concentrator subunit 1 receives the fluorescence signal output by the second fluorescence concentrator 1, a third light concentrator subunit 2 receives the fluorescence signal output by the second fluorescence concentrator 2, and a wavelength of a fluorescence signal output by the third light concentrator subunit 1 is the same as a wavelength of a fluorescence signal output by the third light concentrator subunit 2. A third light concentrator subunit 3 receives the fluorescence signal output by the second fluorescence concentrator 3, a third light concentrator subunit 4 receives the fluorescence signal output by the second fluorescence concentrator 4, and a wavelength of a fluorescence signal output by the third light concentrator subunit 3 is the same as a wavelength of a fluorescence signal output by the third light concentrator subunit 4. A third light concentrator subunit k-1 receives the fluorescence signal output by the second fluorescence concentrator p-1, a third light concentrator subunit k receives the fluorescence signal output by the second fluorescence concentrator p, and a wavelength of a fluorescence signal output by the third light concentrator subunit p-1 is the same as a wavelength of a fluorescence signal output by the third light concentrator subunit p.

In addition, k is greater than n, and the fluorescence extraction unit 420 further includes n optical path combination subunits. Each optical path combination subunit is configured to combine at least two channels of fluorescence signals with a same wavelength into one channel of fluorescence signals, and n channels of fluorescence signals are generated after the k channels of fluorescence signals are combined by the n optical path combination subunits, where in the n channels of fluorescence signals, wavelengths of fluorescence signals in different channels are different. In an example, FIG. 16 shows that the fluorescence signals output by the third light concentrator subunit 1 and the third light concentrator subunit 2 are combined into one channel of fluorescence signals by an optical path combination subunit 1, the fluorescence signals output by the third light concentrator subunit 3 and the third light concentrator subunit 4 are combined into one channel of fluorescence signals by an optical path combination subunit 2, and the fluorescence signals output by the third light concentrator subunit p-1 and the third light concentrator subunit p are combined into one channel of fluorescence signals by an optical path combination subunit n.

Further, the fluorescence extraction unit 420 includes a fluorescence adjusting subunit 423 and/or n filter subunits. The fluorescence adjusting subunit 423 is configured to perform an optical wave aggregation operation, a frequency conversion operation, and an optical wave division operation on the n channels of fluorescence signals, where the n filter subunits are in one-to-one correspondence with the n channels of fluorescence signals, and each filter subunit is configured to filter a fluorescence signal with one wavelength; and the n channels of fluorescence signals are adjusted by the fluorescence adjusting subunit and then output; the n channels of fluorescence signals are filtered by the n filter subunits and then output; or the n channels of fluorescence signals are adjusted by the fluorescence adjusting subunit, filtered by the n filter subunits, and then output.

For example, FIG. 16 shows that the fluorescence extraction unit 420 further includes the n filter subunits, and the filter subunits are in one-to-one correspondence with the n optical path combination subunits. To be specific, for example, one channel of fluorescence signal output by the optical path combination subunit 1 is filtered by a filter subunit 1 and then output to the fluorescence processing unit 430, one channel of fluorescence signal output by the optical path combination subunit 2 is filtered by a filter subunit 2 and then output to the fluorescence processing unit 430, one channel of fluorescence signal output by the optical path combination subunit 3 is filtered by a filter subunit 3 and then output to the fluorescence processing unit 430, and one channel of fluorescence signal output by the optical path combination subunit n is filtered by a filter subunit n and then output to the fluorescence processing unit 430.

Based on a same concept, refer to FIG. 18. An embodiment of this application further provides a signal transmission method, including the following steps.

S1801: A transmitter modulates an electrical signal to a first optical signal with m wavelengths.

Optionally, the electrical signal includes a synchronization signal and a data signal. The synchronization signal is used to determine a time sequence for sending the data signal by the transmitter. The synchronization signal includes a synchronization start indication, a synchronization field, and a synchronization end indication. As described in the foregoing embodiment, the synchronization signal may be implemented by using a training sequence or a wavelength polling pattern.

Optionally, that the first optical signal with m wavelengths is used to carry the foregoing electrical signal may be specifically that first optical signal with j of the m wavelengths is used to carry the synchronization signal. For example, the synchronization signal is modulated to the first optical signal with j of the m wavelengths, or if the synchronization signal is implemented by using the wavelength polling pattern, it may also be understood that the first optical signal with j of the m wavelengths is controlled by using the wavelength polling pattern. The first optical signal with j wavelengths is used to carry the synchronization signal, j is a positive integer, j is greater than 1, and j is less than or equal to m.

Optionally, that the first optical signal with m wavelengths is used to carry the foregoing electrical signal may be specifically: modulating the data signal to the first optical signal with m wavelengths, where the first optical signal with m wavelengths is used to carry the data signal sent by the transmitter.

S1802: The transmitter outputs (or sends/transmits) the first optical signal with m wavelengths, and a receiver receives the first optical signal with m wavelengths from the transmitter.

Optionally, for the synchronization signal, the transmitter may output the first optical signal with j wavelengths to the receiver at a same moment, and the receiver receives the first optical signal with j wavelengths at a same moment; or the transmitter may output the first optical signal with j wavelengths to the receiver at different moments, and the receiver receives the first optical signal with j wavelengths at different moments.

Optionally, for the data signal, the transmitter may output, to the receiver at different moments, the first optical signal with m wavelengths that carries the data signal, and the receiver receives the first optical signal with m wavelengths at different moments. The transmitter may output, to the receiver at a same moment, the first optical signal with m wavelengths that carries the data signal, and the receiver receives the first optical signal with m wavelengths at a same moment. For detailed implementation, refer to the foregoing embodiments. Details are not described in this embodiment of this application again.

S1803: The receiver converts the first optical signal with m wavelengths into a first fluorescence signal.

S1804: The receiver generates n channels of fluorescence signals based on the first fluorescence signal, where wavelengths of fluorescence signals in a same channel are the same, and m and n are both positive integers.

S1805: The receiver converts the n channels of fluorescence signals into electrical signals, and processes the electrical signals.

Optionally, the receiver may convert the n channels of fluorescence signals into n channels of electrical signals, where the n channels of electrical signals are in one-to-one correspondence with the n channels of fluorescence signals, and then perform one or more operations of combination, amplification, and equalization on the n channels of electrical signals.

Optionally, the receiver may further perform power detection on the electrical signal, and extract a wanted signal from the electrical signal, where a signal power corresponding to the wanted signal needs to exceed a preset power threshold. Optionally, the receiver may perform power detection on the electrical signal after starting to perform conversion into the electrical signal for specific time.

Optionally, the receiver may further obtain the synchronization signal of the transmitter from the electrical signal, compare the obtained synchronization signal with a preconfigured synchronization signal, to implement synchronization determining, and if the comparison succeeds, determine that the synchronization succeeds. Then, the receiver may determine the time sequence for sending the data signal by the transmitter. The preconfigured synchronization signal may be understood as a synchronization signal generated by the transmitter, and may be agreed upon by the transmitter and the receiver in advance. The synchronization signal may be the training sequence or the wavelength polling pattern as described above. A synchronization processing mechanism on a side of the receiver is set by using the synchronization signal, so that the receiver can process the data signal, and a system rate is improved.

In addition, it should be noted that S1805 is an optional step, and the receiver may alternatively not perform S1805. This is not limited in this embodiment of this application.

In this embodiment of this application, the transmitter outputs multi-wavelength optical signals, and the receiver receives the multi-wavelength optical signals through multi-wavelength fluorescence collection, so that a large FoV can be maintained, and a receiver alignment requirement can be reduced. In other words, limitations on movement and a posture change of a device in which the receiver is located are reduced. This can be used in an optical wireless communication scenario in which a terminal moves, and link stability can be improved.

The following describes, in detail, a solution of converting the first optical signal with m wavelengths into the first fluorescence signal on the side of the receiver and generating the n channels of fluorescence signals based on the first fluorescence signal.

Solution 1: The receiver may convert the first optical signal with m wavelengths into the first fluorescence signal by using a first fluorescence concentrator, where the first fluorescence concentrator includes p types of fluorescence materials, each type of fluorescence material absorbs an optical signal and excites a fluorescence signal, wavelengths of fluorescence signals excited by different types of fluorescence materials are different, the p types of fluorescence materials absorb the first optical signal with m wavelengths, the first fluorescence signal includes a fluorescence signal with p wavelengths, and p is a positive integer. Optionally, the foregoing fluorescence material includes a superlattice fluorescence material, and this helps improve a system bandwidth and implement high-speed signal transmission.

Based on this, in an optional implementation, the receiver may divide the first fluorescence signal into p channels of fluorescence signals, where wavelengths of fluorescence signals in different channels are different, and propagation directions of fluorescence signals in different channels are different; and filter the p channels of fluorescence signals, to generate the n channels of fluorescence signals, where n is greater than or equal to p. A plurality of channels of fluorescence signals are divided, and the plurality of channels of fluorescence signals are filtered in parallel, so that interference between fluorescence signals with different wavelengths can be further reduced.

In another optional implementation, the receiver may divide the first fluorescence signal into the n channels of fluorescence signals, where n is equal to p, wavelengths of the n channels of fluorescence signals are in one-to-one correspondence with the p wavelengths, and propagation directions of fluorescence signals in different channels are different. Optionally, the receiver may further concentrate and/or filter each channel of the n channels of fluorescence signals. Effective transmission of fluorescence signals can be enhanced through concentration processing, and interference between fluorescence signals with different wavelengths can be avoided through filtering processing, thereby improving system performance.

Optionally, in the foregoing embodiment, before the receiver divides the first fluorescence signal, the method may further include: The receiver performs frequency conversion processing on the first fluorescence signal. Wavelengths of multi-wavelength fluorescence can be controlled equivalently through frequency conversion processing, and fluorescence signals with different wavelengths can be distinguished easily.

Optionally, in the foregoing embodiment, before the receiver divides the first fluorescence signal, the method may further include: The receiver concentrates the first fluorescence signal.

Solution 2: The receiver may receive the first optical signal with m wavelengths from the transmitter by using p second fluorescence concentrators, and convert the first optical signal with m wavelengths into the first fluorescence signal, where the first fluorescence signal includes p channels of fluorescence signals, wavelengths of fluorescence signals in a same channel are the same, each second fluorescence concentrator can receive a first optical signal with a set wavelength and convert the first optical signal with a set wavelength into a one channel of fluorescence signals, a wavelength of the one channel of fluorescence signals is related to the set wavelength, the set wavelength is one of the m wavelengths, and p is a positive integer. The p second fluorescence concentrators may be used to implement a capability of processing multi-wavelength optical signals in parallel, for example, respectively convert first optical signal with different wavelengths into a fluorescence signal in parallel.

In an optional implementation, wavelengths of optical signals received by different second fluorescence concentrators in the p second fluorescence concentrators are different, and p is equal to m. In another optional implementation, the p second fluorescence concentrators include at least two second fluorescence concentrators, wavelengths of optical signals received by the at least two second fluorescence concentrators are the same, and p is greater than m. Optionally, the p second fluorescence concentrators in the foregoing two manners may all be arranged in a stack manner or in an interleaving manner. In this way, multi-wavelength optical signals can be effectively received in a small area or in a same area.

Based on this, the receiver may concentrate the p channels of fluorescence signals by using k third light concentrator subunits, where each third light concentrator subunit concentrates at least one channel of fluorescence signals with a same wavelength in the p channels of fluorescence signals, different third light concentrator subunits correspond to fluorescence signals of different second fluorescence concentrators, k is less than or equal to p, and k is a positive integer.

In an optional implementation, k is equal to n, the n channels of fluorescence signals are generated after the p channels of fluorescence signals are concentrated by the k third light concentrator subunits, and in the n channels of fluorescence signals, wavelengths of fluorescence signals in different channels are different. In another optional implementation, k channels of fluorescence signals are generated after the p channels of fluorescence signals are concentrated by the k third light concentrator subunits, where the k channels of fluorescence signals include at least two channels of fluorescence signals with a same wavelength, and k is greater than n; and the method further includes: The receiver combines the k channels of fluorescence signals into the n channels of fluorescence signals, where in the n channels of fluorescence signals, wavelengths of fluorescence signals in different channels are different.

Further, the method includes: The receiver performs an optical wave aggregation operation, a frequency conversion operation, and an optical wave division operation on the n channels of fluorescence signals; and/or the receiver filters the n channels of fluorescence signals in parallel.

In conclusion, it should be noted that, in the signal processing unit, the electrical signal generation subunit, the multi-wavelength processing subunit, and the optical output unit that are included in the transmitter in embodiments of this application, some units (or components) may be implemented by using a hardware circuit, and other units (or components) may be implemented by using software; or all units (or components) may be implemented by using a hardware circuit; or all units (or components) may be implemented by using software. When one (or some) unit (or component) is implemented by using software, the transmitter includes a processor. The processor implements the one (or some) unit (or component) by running program instructions. For example, if the foregoing electrical signal generation subunit is implemented by using software, the transmitter may complete an electrical signal generation task by running the program instructions. This is equivalent to virtualizing an electrical signal generation subunit based on the processor. Similarly, in the fluorescence conversion unit, the fluorescence extraction unit, and the fluorescence processing unit that are included in the receiver in embodiments of this application, and the subunits, components, and the like in the foregoing units, some units (subunits or components) may be implemented by using a hardware circuit, and other units (subunits or components) are implemented by using software; or all units (subunits or components) may be implemented by using a hardware circuit; or all units (subunits or components) may be implemented by using software. When one (or some) unit (subunit or component) is implemented by using software, the transmitter includes a processor. The processor implements the one (or some) unit (subunit or component) by running program instructions. For example, if the foregoing fluorescence processing unit is implemented by using software, the receiver may complete a fluorescence signal processing service by running the program instructions. This is equivalent to virtualizing a fluorescence processing unit based on the processor

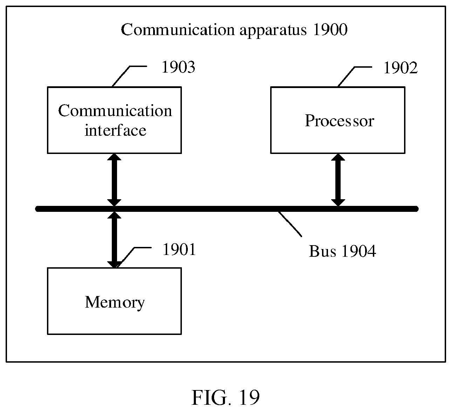

Refer to FIG. 19. An embodiment of this application provides a schematic diagram of a communication apparatus 1900. The communication apparatus 1900 includes a memory 1901, a processor 1902, and a communication interface 1903. The processor 1902, the communication interface 1903, and the memory 1901 may be connected to each other, for example, connected by using a bus 1904.

It may be understood that, when all units (subunits or components) in the transmitter are implemented by using software, a structure of the transmitter may be shown in FIG. 19, to be specific, the communication apparatus shown in FIG. 19. The memory 1901 is configured to store code and data of the transmitter, for example, store code for generating an electrical signal, code for implementing a multi-wavelength processing subunit, and code for implementing an optical output unit. By executing the code, the processor 1902 may obtain, through virtualization, functional units such as a signal processing unit, an electrical signal generation subunit, the multi-wavelength processing subunit, and the optical output unit. In addition, the communication interface 1903 is configured to support signal transmission between the transmitter and an external device. For example, the communication interface is configured to support the transmitter in outputting a first optical signal with m wavelengths.

Similarly, it may be understood that, when all units (subunits or components) in the receiver are implemented by using software, a structure of the receiver may be shown in FIG. 19. In this case, the memory 1901 is configured to store code and data of the receiver, for example, store code for implementing a fluorescence conversion unit, code for implementing a fluorescence extraction unit, code for implementing a fluorescence processing unit, and code for implementing a subunit, a component, and the like in the foregoing unit. By executing the code, the processor 1902 may obtain, through virtualization, functional units such as the fluorescence conversion unit, the fluorescence extraction unit, and the fluorescence processing unit, and the subunit, the component, and the like in the foregoing unit. In addition, the communication interface 1903 is configured to support signal transmission between the receiver and an external device. For example, the communication interface is configured to support the receiver in receiving a first optical signal with m wavelengths.

In addition, the processor 1902 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the digital signal processor and the microprocessor. In addition, the memory may include any medium that can store program code, such as a ROM, a random access memory RAM, a magnetic disk, or an optical disc.

In embodiments of this application, the memory 1901 may be a nonvolatile memory, for example, a hard disk drive (hard disk drive, HDD) or a solid-state drive (solid-state drive, SSD), or may be a volatile memory (volatile memory) such as a random access memory (random access memory, RAM). The memory may alternatively be any other medium that can be configured to carry or store expected program code in a form of an instruction or a data structure and that can be accessed by a computer. This is not limited thereto. The memory in embodiments of this application may alternatively be a circuit or any other apparatus that can implement a storage function, and is configured to store the computer program, the program instructions, and/or the data.

In embodiments of this application, a specific connection medium between the memory 1901, the processor 1902, and the communication interface 1903 is not limited. In embodiments of this application, the memory 1901, the processor 1902, and the communication interface 1903 are connected by using the bus in FIG. 19, and the bus is represented by using a bold line in FIG. 19. A connection manner between other components is merely an example for description, and is not limited thereto. The bus may include an address bus, a data bus, a control bus, and the like. For ease of representation, only one thick line is for representing the bus in FIG. 19, but this does not mean that there is only one bus or only one type of bus.

It should be understood that sequence numbers (or referred to as numbers) of the foregoing processes do not mean execution sequences in various embodiments of this application. The execution sequences of the processes should be determined based on functions and internal logic of the processes, and should not be construed as any limitation on the implementation processes of embodiments of the present invention.

Based on the foregoing embodiments, an embodiment of this application further provides a communication system. The communication system includes at least one transmitter and at least one receiver. Therefore, for technical effects that can be achieved by the communication system, refer to the foregoing method embodiments. Details are not described herein again.

Based on the foregoing embodiments, an embodiment of this application further provides a computer-readable storage medium. The computer-readable storage medium stores a computer program or instructions. When the instructions are executed, the method performed by a transmitting end in any one of the foregoing embodiments is implemented or the method performed by a receiving end is implemented. The computer-readable storage medium may include various media that can store program code, such as a USB flash drive, a removable hard disk, a read-only memory, a random access memory, a magnetic disk, or an optical disc.

An embodiment of this application further provides a chip, including a processor, configured to support the communication apparatus in implementing functions related to the transmitter or the receiver in the foregoing method embodiments. In a possible design, the chip is connected to a memory or the chip includes the memory, and the memory is configured to store a computer program or instructions and data that are necessary for the communication apparatus.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that the computer program or instructions may be used to implement each process and/or each block in the flowcharts and/or the block diagrams and a combination of a process and/or a block in the flowcharts and/or the block diagrams. The computer program or instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

The computer program or instructions may alternatively be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program or instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to embodiments of this application without departing from the scope of embodiments of this application. This application is intended to cover these modifications and variations provided that they fall within the scope of protection defined by the following claims and their equivalent technologies.

## Claims

1. A receiver, comprising a fluorescence conversion unit and a fluorescence extraction unit, wherein an output end of the fluorescence conversion unit is connected to an input end of the fluorescence extraction unit;
the fluorescence conversion unit is configured to: receive a first optical signal with m wavelengths sent by a transmitter, and convert the first optical signal with m wavelengths into a first fluorescence signal; and
the fluorescence extraction unit is configured to generate n channels of fluorescence signals based on the first fluorescence signal, wherein wavelengths of fluorescence signals in a same channel are the same, and m and n are both positive integers.

2. The receiver according to claim 1, wherein the receiver further comprises a fluorescence processing unit; and
the fluorescence processing unit is configured to: convert the n channels of fluorescence signals into electrical signals, and process the electrical signals.

3. The receiver according to claim 1 or 2, wherein the fluorescence conversion unit comprises a first fluorescence concentrator, the first fluorescence concentrator comprises p types of fluorescence materials, each type of fluorescence material absorbs an optical signal and excites a fluorescence signal, wavelengths of fluorescence signals excited by different types of fluorescence materials are different, and the p types of fluorescence materials absorb the first optical signal with m wavelengths, wherein p is a positive integer; and
the fluorescence conversion unit is specifically configured to: convert the first optical signal with m wavelengths into the first fluorescence signal by using the first fluorescence concentrator, and output the first fluorescence signal, wherein the first fluorescence signal comprises a fluorescence signal with p wavelengths.

4. The receiver according to claim 3, wherein the fluorescence extraction unit comprises an optical wave division subunit and n filter subunits, and each filter subunit is configured to filter a fluorescence signal with one wavelength;
the optical wave division subunit is configured to divide the received first fluorescence signal into p channels of fluorescence signals, wherein wavelengths of fluorescence signals in different channels are different, and propagation directions of fluorescence signals in different channels are different; and
the n channels of fluorescence signals are generated after the p channels of fluorescence signals are filtered by the n filter subunits, wherein each channel of the p channels of fluorescence signals is filtered by at least one of the n filter subunits, and n is greater than or equal to p.

5. The receiver according to claim 3, wherein the fluorescence extraction unit comprises an optical wave division subunit; and
the optical wave division subunit is configured to divide the received first fluorescence signal into the n channels of fluorescence signals, wherein n is equal to p, wavelengths of the n channels of fluorescence signals are in one-to-one correspondence with the p wavelengths, and propagation directions of fluorescence signals in different channels are different.

6. The receiver according to claim 5, wherein the fluorescence extraction unit further comprises n second light concentrator subunits and/or n filter subunits, each light concentrator subunit is configured to concentrate a fluorescence signal with one wavelength, and each filter subunit is configured to filter a fluorescence signal with one wavelength; and
the n channels of fluorescence signals are respectively concentrated by the n second light concentrator subunits and then output;
the n channels of fluorescence signals are respectively filtered by the n filter subunits and then output; or
the n channels of fluorescence signals are respectively concentrated by the n second light concentrator subunits, filtered by the n filter subunits, and then output.

7. The receiver according to any one of claims 4 to 6, wherein the optical wave division subunit is further configured to: perform frequency conversion processing on the received first fluorescence signal, and divide, based on different wavelengths, the first fluorescence signal on which frequency conversion has been performed.

8. The receiver according to any one of claims 4 to 7, wherein the fluorescence extraction unit further comprises a first light concentrator subunit; and
the first light concentrator subunit is configured to: receive the first fluorescence signal output by the fluorescence conversion unit, concentrate the first fluorescence signal, and output the concentrated first fluorescence signal to the optical wave division subunit.

9. The receiver according to any one of claims 3 to 8, wherein the fluorescence material comprises a superlattice fluorescence material.

10. The receiver according to claim 2, wherein the fluorescence conversion unit comprises p second fluorescence concentrators, and each second fluorescence concentrator is configured to: receive a first optical signal with a set wavelength, convert the first optical signal with a set wavelength into one channel of fluorescence signals, and output the one channel of fluorescence signals; the p second fluorescence concentrators receive the first optical signal with m wavelengths, wherein the set wavelength is one of the m wavelengths, and p is a positive integer; and
the fluorescence conversion unit is specifically configured to: convert, by using the p second fluorescence concentrators, the first optical signal with m wavelengths into the first fluorescence signal comprising p channels of fluorescence signals, and output the p channels of fluorescence signals, wherein wavelengths of fluorescence signals in a same channel are the same.

11. The receiver according to claim 10, wherein wavelengths of optical signals received by different second fluorescence concentrators in the p second fluorescence concentrators are different, and p is equal to m.

12. The receiver according to claim 10, wherein the p second fluorescence concentrators comprise at least two second fluorescence concentrators, wavelengths of optical signals received by the at least two second fluorescence concentrators are the same, and p is greater than m.

13. The receiver according to any one of claims 10 to 12, wherein the p second fluorescence concentrators are arranged in a stack manner or in an interleaving manner.

14. The receiver according to any one of claims 10 to 13, wherein the fluorescence extraction unit comprises k third light concentrator subunits, and each third light concentrator subunit is configured to: receive at least one channel of fluorescence signals with a same wavelength in the p channels of fluorescence signals, and concentrate the at least one channel of fluorescence signals with a same wavelength, wherein different third light concentrator subunits receive fluorescence signals output by different second fluorescence concentrators, k is less than or equal to p, and k is a positive integer.

15. The receiver according to claim 14, wherein k is equal to n, the n channels of fluorescence signals are generated after the p channels of fluorescence signals are concentrated by the k third light concentrator subunits, and in the n channels of fluorescence signals, wavelengths of fluorescence signals in different channels are different.

16. The receiver according to claim 14, wherein k is greater than n, the fluorescence extraction unit further comprises n optical path combination subunits, and each optical path combination subunit is configured to combine at least two channels of fluorescence signals with a same wavelength into one channel of fluorescence signals;
k channels of fluorescence signals are generated after the p channels of fluorescence signals are concentrated by the k third light concentrator subunits, wherein the k channels of fluorescence signals comprise the at least two channels of fluorescence signals with a same wavelength; and
the n channels of fluorescence signals are generated after the k channels of fluorescence signals are combined by the n optical path combination subunits, wherein in the n channels of fluorescence signals, wavelengths of fluorescence signals in different channels are different.

17. The receiver according to claim 15 or 16, wherein the fluorescence extraction unit further comprises a fluorescence adjusting subunit and/or n filter subunits, the fluorescence adjusting subunit is configured to perform an optical wave aggregation operation, a frequency conversion operation, and an optical wave division operation on the n channels of fluorescence signals, wherein the n filter subunits are in one-to-one correspondence with the n channels of fluorescence signals, and each filter subunit is configured to filter a fluorescence signal with one wavelength; and
the n channels of fluorescence signals are adjusted by the fluorescence adjusting subunit and then output;
the n channels of fluorescence signals are filtered by the n filter subunits and then output; or
the n channels of fluorescence signals are adjusted by the fluorescence adjusting subunit, filtered by the n filter subunits, and then output.

18. The receiver according to any one of claims 1 to 17, wherein the fluorescence processing unit comprises n optical-to-electrical conversion subunits, and the n optical-to-electrical conversion subunits are in one-to-one correspondence with the n channels of fluorescence signals; and
the fluorescence processing unit is further configured to convert the n channels of fluorescence signals into n channels of electrical signals by using the n optical-to-electrical conversion subunits.

19. The receiver according to claim 18, wherein the fluorescence processing unit further comprises an electrical signal processing subunit, and output ends of the n optical-to-electrical conversion subunits are connected to an input end of the electrical signal processing subunit; and
the electrical signal processing subunit is configured to perform one or more operations of combination, amplification, and equalization on the n channels of electrical signals.

20. The receiver according to any one of claims 2 to 19, wherein the first optical signal with m wavelengths is used to carry a synchronization signal, and the synchronization signal is used to determine a time sequence for sending a data signal by the transmitter; and
the electrical signal processing subunit is further configured to: obtain the synchronization signal based on the electrical signals, and determine, based on the synchronization signal, the time sequence for sending the data signal by the transmitter.

21. The receiver according to claim 20, wherein the fluorescence conversion unit is specifically configured to receive a first optical signal with j of the m wavelengths at different moments, wherein the first optical signal with j wavelengths is used to carry the synchronization signal, j is a positive integer, j is greater than 1, and j is less than or equal to m.

22. The receiver according to claim 20, wherein the fluorescence conversion unit is specifically configured to receive a first optical signal with j of the m wavelengths at a same moment, wherein the first optical signal with j wavelengths is used to carry the synchronization signal, j is a positive integer, j is greater than 1, and j is less than or equal to m.

23. The receiver according to any one of claims 1 to 22, wherein the first optical signal with m wavelengths is used to carry the data signal sent by the transmitter; and the fluorescence conversion unit is specifically configured to: receive, at different moments, the first optical signal with m wavelengths that carries the data signal, or receive, at a same moment, the first optical signal with m wavelengths that carries the data signal.

24. A transmitter, comprising a signal processing unit and an optical output unit, wherein an output end of the signal proces sing unit is connected to an input end of the optical output unit;
the signal processing unit is configured to modulate an electrical signal to a first optical signal with m wavelengths; and
the optical output unit is configured to output the first optical signal with m wavelengths to a receiver

25. The transmitter according to claim 24, wherein the electrical signal comprises a synchronization signal, the first optical signal with m wavelengths is used to carry the synchronization signal, and the synchronization signal is used to determine a time sequence for sending a data signal by the transmitter.

26. The transmitter according to claim 25, wherein
the signal processing unit is specifically configured to modulate the synchronization signal to a first optical signal with j of the m wavelengths, wherein the first optical signal with j wavelengths is used to carry the synchronization signal, j is a positive integer, j is greater than 1, and j is less than or equal to m; and
the optical output unit is specifically configured to: output the first optical signal with j wavelengths at a same moment, or output the first optical signal with j wavelengths at different moments.

27. The transmitter according to any one of claims 24 to 26, wherein the electrical signal comprises the data signal, and the first optical signal with m wavelengths is used to carry the data signal sent by the transmitter;
the signal processing unit is specifically configured to modulate the data signal to the first optical signal with m wavelengths; and
the optical output unit is specifically configured to: output the first optical signal with m wavelengths at different moments, or output the first optical signal with m wavelengths at a same moment.

28. A signal transmission method, comprising:
receiving a first optical signal with m wavelengths from a transmitter, and converting the first optical signal with m wavelengths into a first fluorescence signal; and
generating n channels of fluorescence signals based on the first fluorescence signal, wherein wavelengths of fluorescence signals in a same channel are the same, and m and n are both positive integers.

29. The method according to claim 28, wherein the method further comprises:
converting the n channels of fluorescence signals into electrical signals, and processing the electrical signals.

30. The method according to claim 28 or 29, wherein the converting the first optical signal with m wavelengths into a first fluorescence signal comprises:
converting the first optical signal with m wavelengths into the first fluorescence signal by using a first fluorescence concentrator, wherein the first fluorescence concentrator comprises p types of fluorescence materials, each type of fluorescence material absorbs an optical signal and excites a fluorescence signal, wavelengths of fluorescence signals excited by different types of fluorescence materials are different, the p types of fluorescence materials absorb the first optical signal with m wavelengths, the first fluorescence signal comprises a fluorescence signal with p wavelengths, and p is a positive integer.

31. The method according to claim 30, wherein the generating n channels of fluorescence signals based on the first fluorescence signal comprises:
dividing the first fluorescence signal into p channels of fluorescence signals, wherein wavelengths of fluorescence signals in different channels are different, and propagation directions of fluorescence signals in different channels are different; and
filtering the p channels of fluorescence signals, to generate the n channels of fluorescence signals, wherein n is greater than or equal to p.

32. The method according to claim 30, wherein the generating n channels of fluorescence signals based on the first fluorescence signal comprises:
dividing the first fluorescence signal into the n channels of fluorescence signals, wherein n is equal to p, wavelengths of the n channels of fluorescence signals are in one-to-one correspondence with the p wavelengths, and propagation directions of fluorescence signals in different channels are different.

33. The method according to claim 32, wherein the method further comprises: concentrating and/or filtering each channel of the n channels of fluorescence signals.

34. The method according to any one of claims 31 to 33, wherein the method further comprises: performing frequency conversion processing on the first fluorescence signal before dividing the first fluorescence signal.

35. The method according to any one of claims 31 to 34, wherein the method further comprises: concentrating the first fluorescence signal before dividing the first fluorescence signal.

36. The method according to any one of claims 30 to 35, wherein the fluorescence material comprises a superlattice fluorescence material.

37. The method according to claim 29, wherein the receiving a first optical signal with m wavelengths from a transmitter, and converting the first optical signal with m wavelengths into a first fluorescence signal comprises:
receiving the first optical signal with m wavelengths from the transmitter by using p second fluorescence concentrators, and converting the first optical signal with m wavelengths into the first fluorescence signal, wherein the first fluorescence signal comprises p channels of fluorescence signals, wavelengths of fluorescence signals in a same channel are the same, each second fluorescence concentrator can receive a first optical signal with a set wavelength and convert the first optical signal with a set wavelength into a one channel of fluorescence signals, a wavelength of the one channel of fluorescence signals is related to the set wavelength, the set wavelength is one of the m wavelengths, and p is a positive integer.

38. The method according to claim 37, wherein wavelengths of optical signals received by different second fluorescence concentrators in the p second fluorescence concentrators are different, and p is equal to m.

39. The method according to claim 37, wherein the p second fluorescence concentrators comprise at least two second fluorescence concentrators, wavelengths of optical signals received by the at least two second fluorescence concentrators are the same, and p is greater than m.

40. The method according to any one of claims 37 to 39, wherein the p second fluorescence concentrators are arranged in a stack manner or in an interleaving manner.

41. The method according to any one of claims 37 to 40, wherein the method further comprises:
concentrating the p channels of fluorescence signals by using k third light concentrator subunits, wherein each third light concentrator subunit concentrates at least one channel of fluorescence signals with a same wavelength in the p channels of fluorescence signals, different third light concentrator subunits correspond to fluorescence signals of different second fluorescence concentrators, k is less than or equal to p, and k is a positive integer.

42. The method according to claim 41, wherein k is equal to n, the n channels of fluorescence signals are generated after the p channels of fluorescence signals are concentrated by the k third light concentrator subunits, and in the n channels of fluorescence signals, wavelengths of fluorescence signals in different channels are different.

43. The method according to claim 41, wherein k channels of fluorescence signals are generated after the p channels of fluorescence signals are concentrated by the k third light concentrator subunits, wherein the k channels of fluorescence signals comprise at least two channels of fluorescence signals with a same wavelength, and k is greater than n; and the method further comprises: combining the k channels of fluorescence signals into the n channels of fluorescence signals, wherein in the n channels of fluorescence signals, wavelengths of fluorescence signals in different channels are different.

44. The method according to claim 42 or 43, wherein the method further comprises: performing an optical wave aggregation operation, a frequency conversion operation, and an optical wave division operation on the n channels of fluorescence signals; and/or filtering the n channels of fluorescence signals in parallel.

45. The method according to any one of claims 28 to 44, wherein the converting the n channels of fluorescence signals into electrical signals comprises: converting the n channels of fluorescence signals into n channels of electrical signals, wherein the n channels of electrical signals are in one-to-one correspondence with the n channels of fluorescence signals.

46. The method according to claim 45, wherein the processing the electrical signals comprises: performing one or more operations of combination, amplification, and equalization on the n channels of electrical signals.

47. The method according to any one of claims 29 to 46, wherein the first optical signal with m wavelengths is used to carry a synchronization signal, and the synchronization signal is used to determine a time sequence for sending a data signal by the transmitter; and the method further comprises:
obtaining the synchronization signal based on the n channels of electrical signals, and determining, based on the synchronization signal, the time sequence for sending the data signal by the transmitter.

48. The method according to claim 47, wherein the receiving a first optical signal with m wavelengths from a transmitter comprises:
receiving a first optical signal with j of the m wavelengths from the transmitter at different moments, wherein the first optical signal with j wavelengths is used to carry the synchronization signal, j is a positive integer, j is greater than 1, and j is less than or equal to m.

49. The method according to claim 47, wherein the receiving a first optical signal with m wavelengths comprises:
receiving a first optical signal with j of the m wavelengths from the transmitter at a same moment, wherein the first optical signal with j wavelengths is used to carry the synchronization signal, j is a positive integer, j is greater than 1, and j is less than or equal to m.

50. The method according to any one of claims 28 to 49, wherein the first optical signal with m wavelengths is used to carry the data signal sent by the transmitter, and the receiving first optical signal with m wavelengths from a transmitter comprises:
receiving the first optical signal with m wavelengths from the transmitter at different moments; or
receiving the first optical signal with m wavelengths from the transmitter at different moments.

51. A signal transmission method, applied to a transmitter, wherein the method comprises:
modulating an electrical signal to a first optical signal with m wavelengths; and
outputting the first optical signal with m wavelengths.

52. The method according to claim 51, wherein the electrical signal comprises a synchronization signal, the first optical signal with m wavelengths is used to carry the synchronization signal, and the synchronization signal is used to determine a time sequence for sending a data signal by the transmitter.

53. The method according to claim 52, wherein the modulating an electrical signal to a first optical signal with m wavelengths comprises:
modulating the synchronization signal to a first optical signal with j of the m wavelengths, wherein the first optical signal with j wavelengths is used to carry the synchronization signal, j is a positive integer, j is greater than 1, and j is less than or equal to m.

54. The method according to claim 53, wherein the outputting the first optical signal with m wavelengths comprises:
outputting the first optical signal with j wavelengths to a receiver at a same moment; or
outputting the first optical signal with j wavelengths at different moments.

55. The method according to any one of claims 51 to 54, wherein the electrical signal comprises the data signal, and the method further comprises:
modulating the data signal to the first optical signal with m wavelengths, wherein the first optical signal with m wavelengths is used to carry the data signal; and
outputting the first optical signal with m wavelengths at different moments; or
outputting the first optical signal with m wavelengths at a same moment.

56. A communication system, comprising the receiver according to any one of claims 1 to 23 and the transmitter according to any one of claims 24 to 27.

57. A communication apparatus, wherein the communication apparatus comprises a processor, the processor is connected to a memory, and the processor is configured to invoke a program stored in the memory, to perform the method according to any one of claims 28 to 50 or perform the method according to any one of claims 51 to 55.

58. A computer-readable storage medium, wherein the computer-readable storage medium stores instructions, and when the instructions are run on a computer, the computer is enabled to perform the method according to any one of claims 28 to 50 or perform the method according to any one of claims 51 to 55.

59. A computer program product, wherein the computer product comprises a computer program, and when the computer program is run on a computer, the computer is enabled to perform the method according to any one of claims 28 to 50 or perform the method according to any one of claims 51 to 55.

60. A chip system, wherein the chip system comprises a processor, and the processor is configured to perform the method according to any one of claims 28 to 50 or perform the method according to any one of claims 51 to 55.
